# EUROPEAN PATENT APPLICATION

(11) **EP 4 426 040 A1**
(43) Date of publication of application: **04.09.2024**
(21) Application number: 22959969.1
(22) Date of filing: 28.09.2022
(51) Int. Cl.: H04W 72/04, H04W 72/12

(54) **DATA TRANSMISSION METHOD AND APPARATUS, AND ELECTRONIC DEVICE**

(71) Applicant: New H3C Technologies Co., Ltd., Hangzhou, Zhejiang 310052 (CN)
(72) Inventor: ZHOU, Lei, Beijing 100102 (CN); KONG, Lei, Beijing 100102 (CN)
(74) Representative: Grünecker Patent- und Rechtsanwälte PartG mbB
(86) International application number: PCT/CN2022/122313
(87) International publication number: WO 2024/065326

(57) **Abstract**

The present disclosure provides a data transmission method and apparatus, and an electronic device, the method includes: when a sub-band full-duplex (SBFD) time-frequency resource is configured as uplink transmission or flexible transmission, allocating an available time-frequency resource from the SBFD time-frequency resource; and receiving uplink data corresponding to at least one uplink channel on the available time-frequency resource. The technical solution of the present disclosure can improve resource utilization rate.

## Description

### TECHNICAL FIELD

The present disclosure relates to the communication field, and in particular, to a data transmission method and apparatus, and an electronic device.

### BACKGROUND

A TDD (Time Division Duplex) system is widely used in a mobile communication system, such as a 5G system, etc. In a TDD system, a frame structure is divided into a DL (Downlink) slot, a UL (Uplink) slot and a F (Flexible) slot. The DL slot includes DL symbols, and downlink data is processed in the time-domain resources corresponding to these DL symbols. The UL slot includes UL symbols, and uplink data is processed in the time-domain resources corresponding to these UL symbols. An F slot includes at least one F (Flexible) symbol, F symbol can be used for DL, that is, downlink data is processed in time-domain resources corresponding to the F slot; the F symbol can also be used for UL, that is, uplink data is processed in time-domain resources corresponding to the F slot; and the F symbol can also be used for GP (Guard Period), that is, guard of uplink/downlink switching is performed in time-domain resources corresponding to the F symbol. The TDD system can operate in a HD (Half-duplex) mode, that is, the same time-domain resource can only be used for UL or DL at a moment.

### SUMMARY

The present disclosure provides a data transmission method, performed by a base station, including: when a sub-band full-duplex (SBFD) time-frequency resource is configured as uplink transmission or flexible transmission, allocating an available time-frequency resource from the SBFD time-frequency resource; and receiving uplink data corresponding to at least one uplink channel on the available time-frequency resource.

The present disclosure provides a data transmission method, performed by a full-duplex user equipment (UE), including: when a sub-band full-duplex (SBFD) time-frequency resource is configured, by a base station, as uplink transmission or flexible transmission, acquiring an available time-frequency resource allocated by the base station for the full-duplex UE from the SBFD time-frequency resource; for each uplink channel, sending uplink data corresponding to the uplink channel on the available time-frequency resource based on a position relation between an uplink resource occupied by the uplink channel and the SBFD time-frequency resource.

The present disclosure provides a data transmission method, performed by a half-duplex user equipment (UE), including: when a sub-band full-duplex (SBFD) time-frequency resource is configured, by a base station, as uplink transmission or flexible transmission, acquiring an available time-frequency resource allocated by the base station for the half-duplex UE from the SBFD time-frequency resource; for each uplink channel, sending uplink data corresponding to the uplink channel on the available time-frequency resource based on a position relation between an uplink resource occupied by the uplink channel and the SBFD time-frequency resource.

The present disclosure provides a data transmission apparatus, applied in a base station, including: an allocating module, configured to, when a sub-band full-duplex (SBFD) time-frequency resource is configured as uplink transmission or flexible transmission, allocate an available time-frequency resource from the SBFD time-frequency resource; and a transmitting module, configured to receive uplink data corresponding to at least one uplink channel on the available time-frequency resource.

The present disclosure provides a data transmission apparatus, applied to a full-duplex user equipment (UE), including: an acquiring module, configured to, when a sub-band full-duplex (SBFD) time-frequency resource is configured, by a base station, as uplink transmission or flexible transmission, acquire an available time-frequency resource allocated by the base station for the full-duplex UE from the SBFD time-frequency resource; a transmitting module, configured to, for each uplink channel, send uplink data corresponding to the uplink channel on the available time-frequency resource based on a position relation between an uplink resource occupied by the uplink channel and the SBFD time-frequency resource.

The present disclosure provides a data transmission apparatus, applied to a half-duplex user equipment (UE), including: an acquiring module, configured to, when a sub-band full-duplex (SBFD) time-frequency resource is configured, by a base station, as uplink transmission or flexible transmission, acquiring an available time-frequency resource allocated by the base station for the half-duplex UE from the SBFD time-frequency resource; a transmitting module, configured to, for each uplink channel, send uplink data corresponding to the uplink channel on the available time-frequency resource based on a position relation between an uplink resource occupied by the uplink channel and the SBFD time-frequency resource.

The present disclosure provides an electronic device, including a processor and a machine-readable storage medium, where the machine-readable storage medium stores a machine-executable instruction executable by the processor; the processor is configured to execute the machine-executable instruction to implement the above data transmission method.

As can be seen from the above technical solution, uplink data corresponding to an uplink channel can be transmitted on a sub-band full-duplex (SBFD) time-frequency resource, so as to utilize the SBFD time-frequency resource more effectively, improve resource utilization, improve network coverage and capacity, while reducing uplink transmission latency.

### BRIEF DESCRIPTION OF DRAWINGS

FIGS. 1A, 1B and 1C are schematic flowcharts of a data transmission method in an example of the present disclosure.
FIGS. 2A-2G are schematic diagrams of scheduling an uplink channel when a SBFD time-frequency resource is semi-statically configured.
FIG. 3 is a schematic diagram showing a conflict occurred between an uplink channel and a downlink channel in a SBFD time-frequency resource.
FIG. 4 is a schematic diagram showing a conflict occurred between an uplink channel in a SBFD time-frequency resource and a SSB outside the SBFD time-frequency resource.
FIG. 5 is a schematic diagram showing a conflict occurred between an uplink channel in a SBFD time-frequency resource and a downlink channel outside the SBFD time-frequency resource.
FIG. 6 is a schematic diagram of dynamically scheduling an uplink channel when a SBFD time-frequency resource is dynamically configured.
FIG. 7 is a schematic diagram of configuring a grant-free CG PUSCH based on a semi-static SBFD time-frequency resource.
FIGS. 8A-8D are flowcharts of transmitting small data based on a random access process.
FIG. 9 is a schematic diagram showing a conflict occurred between an uplink channel in a SBFD time-frequency resource and a SSB outside the SBFD time-frequency resource.
FIG. 10 is a schematic diagram of transmitting a grant-free CG PUSCH based on a semi-static/dynamic SBFD time-frequency resource under an idle/non-connected state.

### DETAILED DESCRIPTION

The terminologies used in the present disclosure are for the purpose of describing specific embodiments only and are not intended to limit the present disclosure. Singular forms "a", "the" and "said" used in the present disclosure and the appended claims are also intended to include plural forms, unless the context clearly indicates other meaning. It should also be understood that the term "and/or" as used herein refers to and includes any or all possible combinations of one or more associated listed items. It should be understood that although the terms "first", "second", "third", etc., may be used to describe various information in embodiments of the present disclosure, these information should not be limited to these terms. These terms are only used to distinguish a same type of information from each other. For example, without departing from the scope of the present disclosure, first information may also be referred to as second information, and similarly, second information may also be referred to as first information. Depending on context, word "if' as used herein can be interpreted as "when" or "upon" or "in response to determining".

In a TDD system, a frame structure is divided into a DL slot, a UL slot and an F slot, where the DL slot includes DL symbols, and downlink data is processed in time-domain resources corresponding to these DL symbols; the UL slot includes UL symbols, and uplink data is processed in time-domain resources corresponding to these UL symbols; the F slot includes at least one F symbol, which can be used for DL, UL or GP. At present, the TDD system can operate in a HD (half-duplex) mode, that is, at a moment, the same time-domain resource can only be used for either UL or DL. In order to use time-domain resources more flexibly and improve resource utilization, the TDD system can also work in a FD (full-duplex) mode, that is, at a moment, the same time-domain resources can be used for both UL and DL, that is, uplink data and downlink data are processed simultaneously on same time-domain resources.

In the TDD system, once the frame structure is determined, a user equipment can send and receive data according to the frame structure, where the frame structure is divided into DL slots, UL slots and F slots. For a user equipment adopting the HD mode, a base station schedules the user equipment to send or receive according to the frame structure. For a user equipment adopting the FD mode, a base station schedules the user equipment to send, receive, or send and receive at the same time according to the frame structure.

As described above, the base station can configure the frame structure, and inform the user equipment of the frame structure, so that the user equipment can know the frame structure, and thus can correctly send and receive data. From another aspect, after the user equipment knows the frame structure, the user equipment can also know a possible interference between user equipments, so that some interference cancellation technologies can be adopted to reduce the interference caused by other user equipments, and improve reliability of communication.

In an example, in the TDD system, for the frame structure taking downlink transmissions as a main transmission, there are usually more DL slots, which leads to fewer UL slots, which leads to limited uplink transmission rate and increased uplink data transmission latency, and causes the uplink transmission latency to increase, which is disadvantageous for uplink services.

In an example of the present disclosure, a data transmission method is provided, which can transmit uplink data corresponding to an uplink channel on SBFD time-frequency resources, that is, the uplink data corresponding to the uplink channel can be transmitted by using downlink slots or F slots, thereby improving uplink transmission rate and reducing transmission latency of the uplink data.

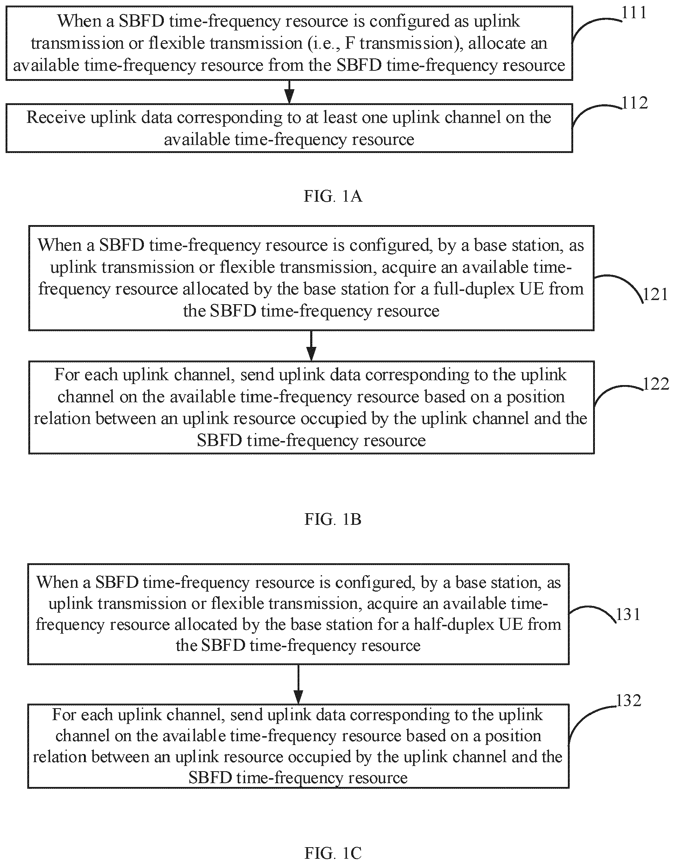

An example of the present disclosure provides a data transmission method, which can be performed by a base station. As shown in FIG. 1A, FIG. 1A is a flowchart of the data transmission method, and the method may include:

Step 111, when a sub-band full-duplex (SBFD) time-frequency resource is configured as uplink transmission or flexible transmission (i.e., F transmission), allocating an available time-frequency resource from the SBFD time-frequency resource.

Step 112, receiving uplink data corresponding to at least one uplink channel on the available time-frequency resource.

In an example, the SBFD time-frequency resource can be semi-statically configured; or, the SBFD time-frequency resource can be dynamically configured.

In an example, each uplink channel is a dynamically scheduled physical uplink shared channel (PUSCH) or physical uplink control channel (PUCCH); or, each uplink channel is a semi-statically scheduled PUSCH or PUCCH. The uplink data corresponding to each uplink channel can be initially transmitted; or, the uplink data corresponding to each uplink channel is K-th repeatedly transmitted uplink data, where K is a positive integer. For example, there are 3 repeatedly transmitted uplink data, and uplink data corresponding to the uplink channel may be a first repeatedly transmitted uplink data, a second repeatedly transmitted uplink data, or a third repeatedly transmitted uplink data.

In an example, the uplink data is in a connected state; or, the uplink data is in an idle state or an inactive state; or, the uplink data is in a random access procedure; or, the uplink data is uplink data completed with a random access procedure but not completed with a reconfiguration process.

As can be seen from the above technical solution, uplink data corresponding to an uplink channel can be transmitted on a SBFD time-frequency resource, so as to utilize the SBFD time-frequency resource more effectively, improve resource utilization, improve network coverage and capacity, while reducing transmission latency (e.g., uplink transmission latency).

An example of the present disclosure provides a data transmission method, where the method may be performed by a full-duplex UE. For a user equipment, if the user equipment reports that FD capability is supporting the FD mode, the user equipment is a full-duplex UE. As shown in FIG. 1B, FIG. 1B is a flowchart of the data transmission method, where the method includes:

Step 121, when a sub-band full-duplex (SBFD) time-frequency resource is configured, by a base station, as uplink transmission or flexible transmission, acquiring an available time-frequency resource allocated by the base station for the full-duplex UE from the SBFD time-frequency resource.

Step 122, for each uplink channel, sending uplink data corresponding to the uplink channel on the available time-frequency resource based on a position relation between an uplink resource occupied by the uplink channel and the SBFD time-frequency resource.

In an example, when all of uplink resources occupied by the uplink channel are within the SBFD time-frequency resource, the uplink data corresponding to the uplink channel may be sent on the available time-frequency resource.

In an example, when none of uplink resources occupied by the uplink channel is within the SBFD time-frequency resource, and the uplink resources are within one or more uplink symbols or one or more F symbols, the uplink data corresponding to the uplink channel may be sent on an uplink resource outside the SBFD time-frequency resource.

In an example, when part of uplink resources occupied by the uplink channel is within the SBFD time-frequency resource, and rest of the uplink resources occupied by the uplink channel is within one or more downlink symbols, the uplink data corresponding to the uplink channel can be forbidden to be sent on the available time-frequency resource.

In an example, when part of uplink resources occupied by the uplink channel is within the SBFD time-frequency resource, and rest of the uplink resources occupied by the uplink channel is within one or more F symbols, the uplink data corresponding to the uplink channel can be forbidden to be sent on the available time-frequency resource.

In an example, when part of uplink resources occupied by the uplink channel is within the SBFD time-frequency resource, and rest of the uplink resources occupied by the uplink channel is within one or more F symbols, the uplink data corresponding to the uplink channel can be sent on the available time-frequency resource.

In an example, when part of uplink resources occupied by the uplink channel is within the SBFD time-frequency resource, and rest of the uplink resources occupied by the uplink channel is within one or more downlink symbols, rate matching can be performed on initial uplink data corresponding to the uplink channel to obtain target uplink data, and the target uplink data can be sent on the available time-frequency resource. Performing rate matching on initial uplink data corresponding to the uplink channel to obtain target uplink data may include, but not limited to: selecting part of the initial uplink data as the target uplink data; or, performing high channel coding rate processing on the initial uplink data to obtain the target uplink data; or, performing high-order modulation on the initial uplink data to obtain the target uplink data.

In an example, when the uplink resource occupied by the uplink channel and a downlink resource occupied by a downlink channel are both within the SBFD time-frequency resource, the uplink data corresponding to the uplink channel can be sent on the available time-frequency resource; and downlink data corresponding to the downlink channel can be forbidden to be received through the SBFD time-frequency resource.

In an example, when the uplink resource occupied by the uplink channel and a downlink resource occupied by a downlink channel are both within the SBFD time-frequency resource, the uplink data corresponding to the uplink channel can be sent on the available time-frequency resource; and downlink data corresponding to the downlink channel can be received through the SBFD time-frequency resource.

In an example, when the uplink resource occupied by the uplink channel is within the SBFD time-frequency resource, a downlink resource occupied by a downlink channel is outside the SBFD time-frequency resource, and the downlink resource occupied by the downlink channel overlaps with the SBFD time-frequency resource, the uplink data corresponding to the uplink channel can be sent on the available time-frequency resource; and downlink data corresponding to the downlink channel can be received through the downlink resource.

In an example, sending the uplink data corresponding to the uplink channel on the available time-frequency resource may include but not limited to: acquiring configured uplink channels; where the uplink channels include at least one of an uplink channel in the SBFD time-frequency resource or an uplink channel in an uplink time-frequency resource. A synchronization signal block (SSB) set and SSB ratio configuration can be acquired from the base station, where the SSB set may include SSBs, and the SSB ratio configuration may include ratio relations between SSBs. For each uplink channel, a target SSB corresponding to the uplink channel can be determined based on the SSB set and the SSB ratio configuration, and the uplink data corresponding to the uplink channel can be sent on the available time-frequency resource based on a matched beam corresponding to the target SSB.

In an example, the SBFD time-frequency resource can be semi-statically configured; or, the SBFD time-frequency resource can be dynamically configured.

In an example, each uplink channel may be dynamically scheduled PUSCH or PUCCH; or each uplink channel may be semi-statically scheduled PUSCH or PUCCH. The uplink data corresponding to each uplink channel is initially transmitted uplink data; or, the uplink data corresponding to each uplink channel is K-th repeatedly transmitted uplink data, where K is a positive integer.

In an example, the uplink data is in a connected state; or, the uplink data is in an idle state or an inactive state; or, the uplink data is in a random access procedure; or, the uplink data is uplink data completed with a random access procedure but not completed with a reconfiguration process.

As can be seen from the above technical solution, uplink data corresponding to an uplink channel can be transmitted on a SBFD time-frequency resource, so as to utilize the SBFD time-frequency resource more effectively, improve resource utilization, improve network coverage and capacity, while reducing transmission latency (e.g., uplink transmission latency).

An example of the present disclosure provides a data transmission method, where the method may be performed by a half-duplex UE. For a user equipment, if the user equipment reports that FD capability is not supporting the FD mode, the user equipment is a half-duplex UE. As shown in FIG. 1C, FIG. 1C is a flowchart of the data transmission method, where the method includes:

Step 131, when a sub-band full-duplex (SBFD) time-frequency resource is configured, by a base station, as uplink transmission or flexible transmission, acquiring an available time-frequency resource allocated by the base station for the half-duplex UE from the SBFD time-frequency resource.

Step 132, for each uplink channel, sending uplink data corresponding to the uplink channel on the available time-frequency resource based on a position relation between an uplink resource occupied by the uplink channel and the SBFD time-frequency resource.

In an example, when all of uplink resources occupied by the uplink channel are within the SBFD time-frequency resource, and slots in the SBFD time-frequency resource do not overlap with slots in a downlink time-frequency resource, the uplink data corresponding to the uplink channel can be sent on the available time-frequency resource.

In an example, when none of uplink resources occupied by the uplink channel is within the SBFD time-frequency resource, and the uplink resources are within one or more uplink symbols or one or more F symbols, the uplink data corresponding to the uplink channel may be sent on an uplink resource outside the SBFD time-frequency resource.

In an example, when part of uplink resources occupied by the uplink channel is within the SBFD time-frequency resource, and rest of the uplink resources occupied by the uplink channel is within one or more downlink symbols, the uplink data corresponding to the uplink channel can be forbidden to be sent on the available time-frequency resource.

In an example, when part of uplink resources occupied by the uplink channel is within the SBFD time-frequency resource, and rest of the uplink resources occupied by the uplink channel is within one or more F symbols, the uplink data corresponding to the uplink channel can be forbidden to be sent on the available time-frequency resource.

In an example, when part of uplink resources occupied by the uplink channel is within the SBFD time-frequency resource, rest of the uplink resources occupied by the uplink channel is within one or more F symbols, and slots in the SBFD time-frequency resource do not overlap with slots in a downlink time-frequency resource (that is, the SBFD time-frequency resource and the downlink time-frequency resource have different slots), the uplink data corresponding to the uplink channel can be sent on the available time-frequency resource.

In an example, when part of uplink resources occupied by the uplink channel is within the SBFD time-frequency resource, rest of the uplink resources occupied by the uplink channel is within a downlink symbol, and slots in the SBFD time-frequency resource do not overlap with slots in a downlink time-frequency resource, rate matching is performed on initial uplink data corresponding to the uplink channel to obtain target uplink data, and the target uplink data is sent on the available time-frequency resource.

In an example, performing rate matching on initial uplink data corresponding to the uplink channel to obtain target uplink data may include, but not limited to: selecting part of the initial uplink data as the target uplink data; or, performing high channel coding rate processing on the initial uplink data to obtain the target uplink data; or, performing high-order modulation on the initial uplink data to obtain the target uplink data.

In an example, when the uplink resource occupied by the uplink channel and a downlink resource occupied by a downlink channel are both within the SBFD time-frequency resource, the uplink data corresponding to the uplink channel can be sent on the available time-frequency resource; and downlink data corresponding to the downlink channel can be forbidden to be received through the SBFD time-frequency resource.

In an example, when the uplink resource occupied by the uplink channel and a downlink resource occupied by a downlink channel are both within the SBFD time-frequency resource, based on a channel type of the uplink channel and a channel type of the downlink channel, the uplink data corresponding to the uplink channel can be sent on the available time-frequency resource, and downlink data corresponding to the downlink channel can be forbidden to be sent through the SBFD time-frequency resource; or, the uplink data corresponding to the uplink channel can be forbidden to be sent on the available time-frequency resource, and downlink data corresponding to the downlink channel is received through the SBFD time-frequency resource.

In an example, when the uplink resource occupied by the uplink channel and a downlink resource occupied by a downlink channel are both within the SBFD time-frequency resource, a target uplink resource not occupied by the downlink resource can be selected from the uplink resource, and the uplink data corresponding to the uplink channel can be sent on the target uplink resource; a target downlink resource not occupied by the uplink resource can be selected from the downlink resource, and downlink data corresponding to the downlink channel can be received on the target downlink resource.

In an example, when a channel processing priority of the uplink channel is greater than a channel processing priority of the downlink channel, the uplink data corresponding to the uplink channel can be sent on the available time-frequency resource, and the downlink data corresponding to the downlink channel can be forbidden to be received through the SBFD time-frequency resource; or, when a channel processing priority of the uplink channel is smaller than a channel processing priority of the downlink channel, the uplink data corresponding to the uplink channel can be forbidden to be sent on the available time-frequency resource, and the downlink data corresponding to the downlink channel can be received through the SBFD time-frequency resource.

In an example, when the channel type of the uplink channel is a PUSCH type or a PUCCH type, and the channel type of the downlink channel is a SSB (Synchronization Signal Block) type or a PDCCH (Physical Downlink Control Channel) type, the uplink data corresponding to the uplink channel can be forbidden to be sent on the available time-frequency resource, and the downlink data corresponding to the downlink channel can be received through the SBFD time-frequency resource. When the channel type of the uplink channel is the PUCCH type, and the channel type of the downlink channel is a channel state information-reference signal (CSI-RS) type or a physical downlink shared channel (PDSCH) type, the uplink data corresponding to the uplink channel can be sent on the available time-frequency resource, and the downlink data corresponding to the downlink channel can be forbidden to be received through the SBFD time-frequency resource. When the channel type of the uplink channel is the PUSCH type, and the channel type of the downlink channel is the CSI-RS type, the uplink data corresponding to the uplink channel is forbidden to be sent on the available time-frequency resource, and the downlink data corresponding to the downlink channel can be received through the SBFD time-frequency resource.

In an example, when the channel type of the uplink channel is the PUSCH type, and the channel type of the downlink channel is the PDSCH type, then: when the uplink channel is dynamically scheduled and the downlink channel is semi-statically scheduled, the uplink data corresponding to the uplink channel can be sent on the available time-frequency resource, and the downlink data corresponding to the downlink channel can be forbidden to be received through the SBFD time-frequency resource. When the uplink channel is semi-statically scheduled and the downlink channel is dynamically scheduled, the uplink data corresponding to the uplink channel can be forbidden to be sent on the available time-frequency resource, and the downlink data corresponding to the downlink channel can be received through the SBFD time-frequency resource. When the uplink channel and the downlink channel are both dynamically scheduled, or the uplink channel and the downlink channel are both semi-statically scheduled, and when a service priority corresponding to the uplink channel is higher than a service priority corresponding to the downlink channel, the uplink data corresponding to the uplink channel is sent on the available time-frequency resource, and downlink data corresponding to the downlink channel is forbidden to be received through the SBFD time-frequency resource; when the service priority corresponding to the uplink channel is lower than the service priority of the downlink channel, the uplink data corresponding to the uplink channel is forbidden to be sent on the available time-frequency resource, and downlink data corresponding to the downlink channel is received through the SBFD time-frequency resource.

In an example, when a service priority corresponding to the uplink channel is equal to a service priority corresponding to the downlink channel, then: when a time sequence corresponding to the uplink channel is earlier than a time sequence corresponding to the downlink channel, the uplink data corresponding to the uplink channel is sent on the available time-frequency resource, and downlink data corresponding to the downlink channel is forbidden to be received through the SBFD time-frequency resource; when the time sequence corresponding to the uplink channel is later than the time sequence corresponding to the downlink channel, the uplink data corresponding to the uplink channel is forbidden to be sent on the available time-frequency resource, and downlink data corresponding to the downlink channel is received through the SBFD time-frequency resource. Or, based on a random sequence, the uplink data corresponding to the uplink channel can be sent on the available time-frequency resource, and downlink data corresponding to the downlink channel can be forbidden to be received through the SBFD time-frequency resource; or, based on a random sequence, the uplink data corresponding to the uplink channel can be forbidden to be sent on the available time-frequency resource, and downlink data corresponding to the downlink channel can be received through the SBFD time-frequency resource.

In an example, when the uplink resource occupied by the uplink channel is within the SBFD time-frequency resource, a downlink resource occupied by a downlink channel is outside the SBFD time-frequency resource, and the downlink resource occupied by the downlink channel overlaps with the SBFD time-frequency resource, based on a channel type of the uplink channel and a channel type of the downlink channel, the uplink data corresponding to the uplink channel can be sent on the available time-frequency resource, and downlink data corresponding to the downlink channel can be forbidden to be received through the downlink resource; or, the uplink data corresponding to the uplink channel can be forbidden to be sent on the available time-frequency resource, and downlink data corresponding to the downlink channel can be received through the downlink resource.

In an example, when the uplink resource occupied by the uplink channel is within the SBFD time-frequency resource, a downlink resource occupied by a downlink channel is outside the SBFD time-frequency resource, and the downlink resource occupied by the downlink channel overlaps with the SBFD time-frequency resource, a target uplink resource not occupied by the downlink resource can be selected from the uplink resource, and the uplink data corresponding to the uplink channel can be sent on the target uplink resource; a target downlink resource not occupied by the uplink resource can be selected from the downlink resource, and downlink data corresponding to the downlink channel can be received on the target downlink resource.

In an example, sending the uplink data corresponding to the uplink channel on the target uplink resource may include but not limited to: rate matching can be performed on initial uplink data corresponding to the uplink channel to obtain target uplink data, and the target uplink data can be sent on the target uplink resource.

In an example, when a channel processing priority of the uplink channel is greater than a channel processing priority of the downlink channel, the uplink data corresponding to the uplink channel can be sent on the available time-frequency resource, and the downlink data corresponding to the downlink channel can be forbidden to be received through the downlink resource; or, when a channel processing priority of the uplink channel is smaller than a channel processing priority of the downlink channel, the uplink data corresponding to the uplink channel can be forbidden to be sent on the available time-frequency resource, and the downlink data corresponding to the downlink channel can be received through the downlink resource.

In an example, when the channel type of the uplink channel is a PUSCH type or a PUCCH type, and the channel type of the downlink channel is a SSB type or a PDCCH type, the uplink data corresponding to the uplink channel can be forbidden to be sent on the available time-frequency resource, and the downlink data corresponding to the downlink channel can be received through the downlink resource. When the channel type of the uplink channel is the PUCCH type, and the channel type of the downlink channel is a channel state information-reference signal (CSI-RS) type or a physical downlink shared channel (PDSCH) type, the uplink data corresponding to the uplink channel can be sent on the available time-frequency resource, and the downlink data corresponding to the downlink channel can be forbidden to be received through the downlink resource. When the channel type of the uplink channel is the PUSCH type, and the channel type of the downlink channel is the CSI-RS type, the uplink data corresponding to the uplink channel can be forbidden to be sent on the available time-frequency resource, and the downlink data corresponding to the downlink channel can be received through the downlink resource.

In an example, when the channel type of the uplink channel is the PUSCH type, and the channel type of the downlink channel is the PDSCH type, then: when the uplink channel is dynamically scheduled and the downlink channel is semi-statically scheduled, the uplink data corresponding to the uplink channel can be sent on the available time-frequency resource, and the downlink data corresponding to the downlink channel can be forbidden to be received through the downlink resource. When the uplink channel is semi-statically scheduled and the downlink channel is dynamically scheduled, the uplink data corresponding to the uplink channel can be forbidden to be sent on the available time-frequency resource, and the downlink data corresponding to the downlink channel can be received through the downlink resource. When the uplink channel and the downlink channel are both dynamically scheduled, or the uplink channel and the downlink channel are both semi-statically scheduled, and when a service priority corresponding to the uplink channel is higher than a service priority corresponding to the downlink channel, the uplink data corresponding to the uplink channel can be sent on the available time-frequency resource, and downlink data corresponding to the downlink channel can be forbidden to be received through the downlink resource; when the service priority corresponding to the uplink channel is lower than the service priority of the downlink channel, the uplink data corresponding to the uplink channel can be forbidden to be sent on the available time-frequency resource, and downlink data corresponding to the downlink channel can be received through the downlink resource.

In an example, when a service priority corresponding to the uplink channel is equal to a service priority corresponding to the downlink channel, then: when a time sequence corresponding to the uplink channel is earlier than a time sequence corresponding to the downlink channel, the uplink data corresponding to the uplink channel can be sent on the available time-frequency resource, and downlink data corresponding to the downlink channel can be forbidden to be received through the downlink resource; when the time sequence corresponding to the uplink channel is later than the time sequence corresponding to the downlink channel, the uplink data corresponding to the uplink channel can be forbidden to be sent on the available time-frequency resource, and downlink data corresponding to the downlink channel can be received through the downlink resource. Or, based on a random sequence, the uplink data corresponding to the uplink channel can be sent on the available time-frequency resource, and downlink data corresponding to the downlink channel can be forbidden to be received through the downlink resource; or, based on a random sequence, the uplink data corresponding to the uplink channel can be forbidden to be sent on the available time-frequency resource, and downlink data corresponding to the downlink channel can be received through the downlink resource.

In an example, when the uplink resource occupied by the uplink channel is within the SBFD time-frequency resource, a downlink resource occupied by a SSB is outside the SBFD time-frequency resource, and the downlink resource occupied by the SSB overlaps with the SBFD time-frequency resource, the uplink data corresponding to the uplink channel can be forbidden to be sent on the available time-frequency resource; and SSB corresponding to the downlink channel can be received through the downlink resource.

In an example, when the uplink resource occupied by the uplink channel is within the SBFD time-frequency resource, the downlink resource occupied by the SSB is outside the SBFD time-frequency resource, and the downlink resource occupied by the SSB overlaps with the SBFD time-frequency resource, SSB corresponding to the downlink channel can be received through the downlink resource; when the SSB does not need to be received through the downlink resource, the uplink data corresponding to the uplink channel can be sent on the available time-frequency resource.

In an example, sending the uplink data corresponding to the uplink channel on the available time-frequency resource may include but not limited to: acquiring configured uplink channels; where the uplink channels include at least one of an uplink channel in the SBFD time-frequency resource or an uplink channel in an uplink time-frequency resource. A synchronization signal block (SSB) set and SSB ratio configuration can be acquired from the base station, where the SSB set may include SSBs, and the SSB ratio configuration may include ratio relations between SSBs. For each uplink channel, a target SSB corresponding to the uplink channel can be determined based on the SSB set and the SSB ratio configuration, and the uplink data corresponding to the uplink channel can be sent on the available time-frequency resource based on a matched beam corresponding to the target SSB.

In an example, the SBFD time-frequency resource can be semi-statically configured; or, the SBFD time-frequency resource can be dynamically configured.

In an example, each uplink channel may be dynamically scheduled PUSCH or PUCCH; or each uplink channel may be semi-statically scheduled PUSCH or PUCCH. The uplink data corresponding to each uplink channel is initially transmitted uplink data; or, the uplink data corresponding to each uplink channel is K-th repeatedly transmitted uplink data, where K is a positive integer.

In an example, the uplink data is in a connected state; or, the uplink data is in an idle state or an inactive state; or, the uplink data is in a random access procedure; or, the uplink data is uplink data completed with a random access procedure but not completed with a reconfiguration process.

As can be seen from the above technical solution, uplink data corresponding to an uplink channel can be transmitted on a SBFD time-frequency resource, so as to utilize the SBFD time-frequency resource more effectively, improve resource utilization and improve network coverage and capacity, while reducing transmission latency (e.g., uplink transmission latency).

With reference to the following examples, the above technical solution of the present disclosure will be described.

The frame structure of the TDD can be completed through semi-statically configuring and dynamically indicating. A plurality of SFCs (Slot Format Combination) are defined through SFI (Slot Format Indicator) in high-level signaling. For example, a base station can select slot formats satisfying service requirements, and add these slot formats to the SFC. Some slot formats can be referred to from Table 1, where D represents a DL symbol, U represents a UL symbol, F represents a flexible symbol. For each SFC, the SFC is identified by a fixed ID, and includes one or more slot format types.

**Table 1**

| Index of slot formats | Symbols in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56-254 | Reserved | | | | | | | | | | | | | |
| 255 | A user equipment determines a slot format according to tdd-UL-DL-ConfigurationCommon (uplink and downlink common configuration), tdd-UL-DL-ConfigurationDedicated (uplink and downlink dedicated configuration), and DCI format. | | | | | | | | | | | | | |

After completing SFI configuration, the base station can send a plurality of slot format combinations to the user equipment in RRC (Radio Resource Control) signaling. After configuring a plurality of slot format combinations through RRC signaling, the base station can inform the user equipment of the index of the currently used SFC in DCI (Downlink Control Information) format 2_0 through periodic PDCCH. After receiving information of DCI format 2_0 correctly, the user equipment determines the slot format of each slot within a certain period according to the indicated SFC index value. Thus, the base station and the user equipment can complete configuration of the frame structure through dynamic indication, and can carry out normal uplink and downlink data transmission.

For resource assignment/allocation, the assignment can be divided into time-domain resource assignment and frequency-domain resource assignment (taking the resource assignment of downlink channels as an example). Time-domain resource assignment: a time-domain resource assignment field in DCI indicates a time-domain position of the downlink channel, where the field has a total of 4 bits with values ranging from 0 to 15. Assuming a value is m, then m+1 indicates a row index of the time-domain resource assignment table, and information in this row indicates time-domain resources of PDSCH. There are two ways of indicating: one is to indicate three information: a slot offset between a PDSCH and a PDCCH scheduling the PDSCH, an initial symbol of the PDSCH in the slot, and the number of consecutive symbols in the PDSCH. Another one is to indicate a slot offset between a PDSCH and a PDCCH scheduling the PDSCH, and a SLIV (symbol length indicator value), where the user equipment computes an initial symbol of the PDSCH and a number of consecutive symbols in the PDSCH according to the SLIV value.

Frequency-domain resource assignment: a frequency-domain resource assignment field in DCI indicates the frequency-domain resource assignment of downlink channel. The PDSCH frequency-domain resource assignment can be divided into two types of a Type 0 and a Type 1, where Type 0 supports discontinuous resource assignment to obtain a frequency diversity gain, and Type 1 supports continuous resource assignment, which can reduce a number of bits required for this field, and DCI format 1_0 only supports Type 1.

Type 0: for discontinuous resource assignment type, an RBG (resource block group) is a VRB (virtual resource block) group consisted of P continuous VRBs, and the number is determined by a high-level parameter rbg-Size and a BWP bandwidth. In the resource assignment type of Type 0, Frequency-Domain Resource Assignment serves as a bitmap to indicate which RBGs are allocated to downlink channels, where each bit in the bitmap represents an RBG, and a highest bit corresponds to RBGO, and so on; a bit of 1 indicates that the RBG is allocated to the downlink channel, and a bit of 0 indicates that the RBG is not a downlink channel resource.

Type 1: the frequency-domain resource indication field does not serve as a bitmap, but indicates a RIV (Resource Indicator Value), the user equipment computes an initial RB (resource block) and a number of occupied RBs of the downlink channel according to the value.

In the TDD system, the frame structure can be divided into UL slot, DL slot and F slot. The symbols in the F slot can be configured as UL symbols, DL symbols and flexible (F: flexible) symbols, and F symbols can be used for UL, DL or GP. Uplink data corresponding to the uplink channel can be transmitted in a UL slot, or in a UL symbol or a F symbol in a F slot, but the uplink data corresponding to the uplink channel cannot be transmitted in a DL slot nor in a DL symbol in a F slot.

In the TDD system, SBFD time-frequency resources can be configured in time-frequency resources (such as UL slot, DL slot and F slot), and data in different directions from other time-frequency resources can be transmitted on the SBFD time-frequency resources. For example, SBFD time-frequency resources can be configured in DL slots, and uplink data corresponding to the uplink channel can be transmitted through the SBFD time-frequency resources, so that the uplink data corresponding to the uplink channel can be transmitted in DL slots. For another example, SBFD time-frequency resources can be configured in DL symbols of F slots, and uplink data corresponding to the uplink channel can be transmitted through the SBFD time-frequency resources, so that the uplink data corresponding to the uplink channel is transmitted in the DL symbols of the F slots.

In an example, SBFD symbols are defined as symbols in which base station and user equipment can configure SBFD sub-bands. On the SBFD sub-bands of these SBFD symbols (referred to as SBFD time-frequency resources), base station and user equipment can perform full-duplex communication, that is, on SBFD time-frequency resources, uplink transmission, downlink transmission, or simultaneous uplink and downlink transmission can be performed.

SBFD time-frequency resources can be clearly indicated as uplink, downlink or Flexible. When SBFD time-frequency resources are indicated as Flexible, uplink or downlink can be flexibly scheduled in SBFD time-frequency resources.

SBFD time-frequency resources can be configured in DL symbols, F symbols and UL symbols, and slots configured with SBFD time-frequency resources can also be referred to as SBFD slots. For example, when configuring SBFD time-frequency resources in DL symbols of a DL slot, the DL slot is also referred to as an SBFD slot. When configuring SBFD time-frequency resources in UL symbols of a UL slot, the UL slot is also referred to as an SBFD slot. When configuring SBFD time-frequency resources in DL symbols, UL symbols or F symbols of an F slot, the F slot is also referred to as an SBFD slot.

For a user equipment without SBFD capability, all SBFD configurations will be ignored. For a user equipment with SBFD capability, uplink transmission, downlink transmission, or simultaneous uplink and downlink transmission can be performed on the SBFD time-frequency resources. In the following, the user equipment with SBFD capability is taken as an example.

For user equipments with SBFD capability, one type is a half-duplex UE supporting SBFD capability, that is, the UE can send or receive on SBFD time-frequency resources, but at the same time, it can only send or only receive. Another type is a full-duplex UE supporting SBFD capability, that is, the UE can send and receive on SBFD time-frequency resources, that is, can send and receive on SBFD time-frequency resources at the same time.

In an example, uplink data corresponding to the uplink channel can be transmitted in SBFD time-frequency resources. For example, the SBFD time-frequency resources are configured in a DL slot, and the uplink data corresponding to the uplink channel is transmitted through the SBFD time-frequency resources, so that the uplink channel can be scheduled in the SBFD time-frequency resources of the DL slot. Alternatively, the SBFD time-frequency resources are configured in an F slot, and the uplink data corresponding to the uplink channel is transmitted through the SBFD time-frequency resources, so that the uplink channel can be scheduled in the SBFD time-frequency resources of the F slot. By determining a scheduling strategy of uplink channels by base station and user equipment in SBFD time-frequency resources, uplink transmission based on SBFD time-frequency resources can be realized in TDD system, and the overall performance of TDD system can be improved. By putting forward the transmission criteria of uplink data, it is ensured that existing data transmission will not be affected while transmitting uplink data.

In an example, the base station can set the SBFD time-frequency resource as uplink transmission or Flexible transmission (that is, F transmission). When the SBFD time-frequency resource is set as uplink transmission or Flexible transmission, the base station can allocate an available time-frequency resource from the SBFD time-frequency resource.

For a full-duplex UE, when the SBFD time-frequency resource is set as uplink transmission or Flexible transmission by the base station, the full-duplex UE can acquire the available time-frequency resource allocated by the base station from the SBFD time-frequency resource and send the uplink data corresponding to the uplink channel on the available time-frequency resource, so that the base station can receive the uplink data corresponding to the uplink channel on the available time-frequency resource.

For a half-duplex UE, when the SBFD time-frequency resource is set as uplink transmission or Flexible transmission by the base station, the half-duplex UE can acquire the available time-frequency resource allocated by the base station from the SBFD time-frequency resource and send the uplink data corresponding to the uplink channel on the available time-frequency resource, so that the base station can receive the uplink data corresponding to the uplink channel on the available time-frequency resource.

In an example, the SBFD time-frequency resource can be semi-statically configured, such as semi-statically configured through RRC signaling. Alternatively, SBFD time-frequency resources can also be dynamically configured, such as dynamically configured through DCI signaling.

In an example, the uplink channel can be PUSCH or PUCCH, for example, dynamically scheduled PUSCH or PUCCH; or, semi-statically scheduled PUSCH or PUCCH.

In an example, the uplink data corresponding to the uplink channel may be initially transmitted; or, the uplink data corresponding to the uplink channel may also be uplink data transmitted repeatedly.

In an example, the uplink data may be in a connected state; or, the uplink data may be in an idle state or an inactive state; or, the uplink data may be in a random access procedure; or, the uplink data may be uplink data completed with a random access procedure but not completed with a reconfiguration process. Certainly, the above are only a few examples, and there is no restriction on the type of uplink data.

In an example, in order to transmit uplink data in SBFD time-frequency resources, the following cases may be included:
Case 1: In the FD mode of TDD, for transmission procedure of uplink data in connected state, the uplink data corresponding to the uplink channel (PUSCH/PUCCH) can be transmitted in the semi-statically configured SBFD time-frequency resources.

### 1. Transmission criteria of uplink channel (PUSCH/PUCCH).

Base station can configure semi-static SBFD time-frequency resources through broadcast signaling (such as RRC signaling) and set the SBFD time-frequency resources as uplink transmission or Flexible transmission, that is, SBFD time-frequency resources can be used for uplink transmission or Flexible transmission. For a full-duplex UE supporting SBFD time-frequency resources, the full-duplex UE can use SBFD time-frequency resources to send uplink data corresponding to the uplink channel, and the full-duplex UE does not need to consider whether there is a downlink channel overlapping with the uplink channel in time-domain resources, and does not need to consider the DL/UL switching time. In addition, for a half-duplex UE supporting SBFD time-frequency resources, when there is no downlink channel overlapping with the uplink channel in time-domain resources (and slots in SBFD time-frequency resources do not overlap with slots in the downlink time-frequency resources, that is, the slots of both are different), or when the DL/UL switching time allows, the half-duplex UE can use SBFD time-frequency resources to send uplink data corresponding to the uplink channel. When the full-duplex UE or the half-duplex UE uses SBFD time-frequency resources to send uplink data corresponding to the uplink channel, base station can use SBFD time-frequency resources to receive uplink data corresponding to the uplink channel.

When a full-duplex UE or a half-duplex UE uses SBFD time-frequency resources to send uplink data corresponding to the uplink channel, and when all uplink resources occupied by the uplink channel are in SBFD time-frequency resources (for UL), the uplink data corresponding to the uplink channel can be sent on the SBFD time-frequency resources.

For example, a full-duplex UE or a half-duplex UE can acquire the available time-frequency resource allocated by the base station from the SBFD time-frequency resource, and send the uplink data corresponding to the uplink channel on the available time-frequency resource.

When a full-duplex UE or a half-duplex UE uses SBFD time-frequency resources to send uplink data corresponding to an uplink channel, when all uplink resources occupied by the uplink channel are not in SBFD time-frequency resources and these uplink resources are located in uplink symbols or F symbols, uplink data corresponding to the uplink channel can be sent on uplink resources (that is, uplink resources occupied by the uplink channel) other than SBFD time-frequency resources.

When a full-duplex UE or a half-duplex UE uses SBFD time-frequency resources to send uplink data corresponding to an uplink channel, and when all uplink resources occupied by the uplink channel are not in SBFD time-frequency resources and these uplink resources are located in downlink symbols, the uplink data corresponding to the uplink channel cannot be transmitted.

When a full-duplex UE or a half-duplex UE uses SBFD time-frequency resources to send uplink data corresponding to an uplink channel, and when part of the uplink resources occupied by the uplink channel are in SBFD time-frequency resources and rest of uplink resources occupied by the uplink channel are in downlink symbols, the uplink data corresponding to the uplink channel cannot be sent, that is, uplink data corresponding to the uplink channel is forbidden to be sent on the available time-frequency resource of the SBFD time-frequency resource.

When a full-duplex UE or a half-duplex UE uses SBFD time-frequency resources to send uplink data corresponding to an uplink channel, and when part of the uplink resources occupied by the uplink channel are in SBFD time-frequency resources and rest of uplink resources occupied by the uplink channel are in uplink symbols, the uplink data corresponding to the uplink channel is sent, for example, the uplink data (i.e. partial uplink data) corresponding to the uplink channel is sent on the available time-frequency resources of SBFD time-frequency resource and the uplink data (rest of uplink data) corresponding to the uplink channel is sent on uplink symbols.

When a full-duplex UE or a half-duplex UE uses SBFD time-frequency resources to send uplink data corresponding to the uplink channel, and when part of the uplink resources occupied by the uplink channel are in SBFD time-frequency resources and rest of the uplink resources occupied by the uplink channel are in an F symbol, the uplink data corresponding to the uplink channel cannot be sent, that is, the uplink data corresponding to the uplink channel is forbidden to be sent on the available time-frequency resource of the SBFD time-frequency resource.

When a full-duplex UE or a half-duplex UE uses SBFD time-frequency resources to send uplink data corresponding to an uplink channel, and when part of the uplink resources occupied by the uplink channel are in SBFD time-frequency resources and rest of the uplink resources occupied by the uplink channel are in F symbols, the uplink data corresponding to the uplink channel is sent, for example, the uplink data (i.e., partial uplink data) corresponding to the uplink channel is sent on the available time-frequency resource of the SBFD time-frequency resource and the uplink data (i.e., rest of the uplink data) corresponding to the uplink channel on F symbols.

When a full-duplex UE or a half-duplex UE uses SBFD time-frequency resources to transmit uplink data corresponding to an uplink channel, and when part of the uplink resources occupied by the uplink channel are in SBFD time-frequency resources and rest of the uplink resources occupied by the uplink channel are in downlink symbols, the initial uplink data corresponding to the uplink channel (i.e., the uplink data to be transmitted) can be performed with rate matching to obtain target uplink data after rate matching, and the target uplink data corresponding to the uplink channel can be transmitted on the available time-frequency resource of the SBFD time-frequency resource.

When a full-duplex UE or a half-duplex UE uses SBFD time-frequency resources to transmit uplink data corresponding to the uplink channel, and when part of the uplink resources occupied by the uplink channel are in SBFD time-frequency resources and rest of the uplink resources occupied by the uplink channel are in F symbols, the initial uplink data corresponding to the uplink channel (i.e., the uplink data to be transmitted) can be performed with rate matching to obtain target uplink data after rate matching, and the target uplink data corresponding to the uplink channel can be transmitted on the available time-frequency resource of SBFD time-frequency resource.

In an example, a full-duplex UE or a half-duplex UE can perform rate matching according to the available time-frequency resource. For example, the rate matching can be performed in the following ways: selecting some data from the initial uplink data as target uplink data, for example, data amount that can be transmitted can be determined based on the available time-frequency resource, and some data can be selected from the initial uplink data as the target uplink data based on the data amount, that is, the target uplink data can be carried by the available time-frequency resource. Alternatively, the initial uplink data performed with a high channel coding rate to obtain the target uplink data, for example, the initial uplink data is processed by a higher channel coding rate, so that the initial uplink data is compressed, so that the available time-frequency resource can carry the target uplink data. Alternatively, high-order modulation is performed on the initial uplink data to obtain the target uplink data, for example, the initial uplink data is processed by high-order modulation, so that the available time-frequency resource can carry the target uplink data.

In an example, when a full-duplex UE or a half-duplex UE uses SBFD time-frequency resources to send uplink data corresponding to an uplink channel, the user equipment can send uplink data corresponding to one or more uplink channels in the SBFD time-frequency resources. For each uplink channel, the uplink channel can be dynamically scheduled PUSCH or PUCCH; the uplink channel can also be semi-statically scheduled PUSCH or PUCCH. The uplink data corresponding to the uplink channel can be initially transmitted or repeatedly transmitted.

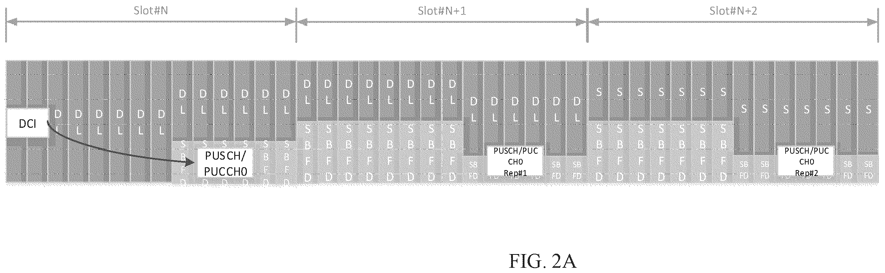

As shown in FIG. 2A, FIG. 2A is a schematic diagram of transmitting dynamically scheduled PUSCH/PUCCH with rep typeA (a number of repetitions can be configured through an RRC parameter number OfRepetitions (a number of repetitions) or pusch-AggregationFactor (physical uplink shared channel-aggregation factor) to indicate the times of repeated transmissions) when the SBFD time-frequency resource is semi-statically configured, where Slot represents slot. The base station uses DCI to schedule the user equipment to send uplink data corresponding to PUSCH/PUCCH on the SBFD time-frequency resource, and the PUSCH/PUCCH has a TypeA repeated transmission mechanism (repeated transmission times M=3 times).

Since PUSCH/PUCCHO is in the SBFD time-frequency resource, normal transmission can be performed.

Since part of PUSCH/PUCCH0Rep#1 is in the SBFD time-frequency resource and another part is in the DL resource, two processing manners can be adopted: a first one does not allow to send, and a second one allows to use the SBFD time-frequency resource to send uplink data corresponding to PUSCH/PUCCHORep# 1. However, when sending the uplink data, rate matching can be performed according to the available time-frequency resource of the SBFD time-frequency resource.

Since part of PUSCH/PUCCH0Rep#2 is in the SBFD time-frequency resource and another part is in the Flexible resource, three processing manners can be adopted: a first one does not allow to send, and a second one allows to send, and a third one allows to use the SBFD time-frequency resource to send uplink data corresponding to PUSCH/PUCCHORep#2. However, rate matching needs to be performed according to the available time-frequency resource of the SBFD time-frequency resource.

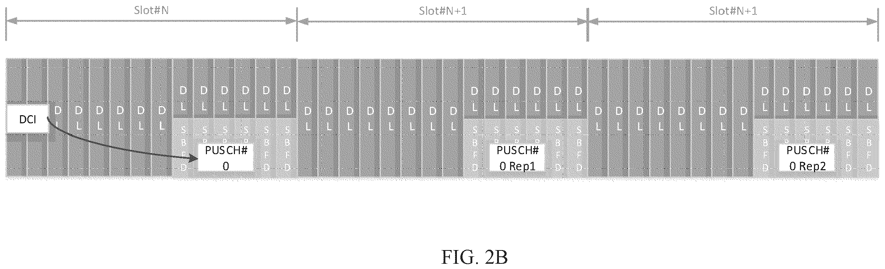

As shown in FIG. 2B, FIG. 2B is another schematic diagram of transmitting dynamically scheduled PUSCH/PUCCH when configuring SBFD time-frequency resources semi-statically, the principle is similar to that of FIG. 2A, and will not be repeated here.

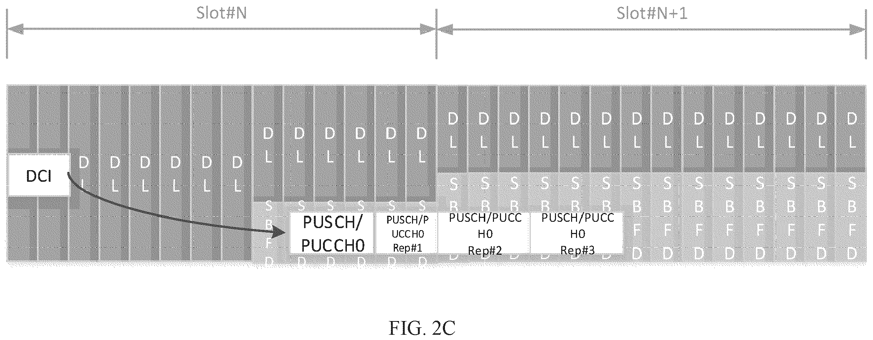

As shown in FIG. 2C, FIG. 2C is a schematic diagram of transmitting dynamically scheduled PUSCH/PUCCH with rep type B when semi-statically configuring SBFD time-frequency resources. The base station uses DCI to schedule the user equipment to send uplink data corresponding to PUSCH/PUCCH on the SBFD time-frequency resource, and the PUSCH/PUCCH has a TypeB repeated transmission mechanism (repeated transmission times M=4 times). Obviously, all four repeated transmissions of PUSCH/PUCCHO are in SBFD time-frequency resources, so all these uplink data can be sent.

In FIG. 2C, PUSCH/PUCCH0Rep#1 should occupy three symbols, but since it needs to span across slot#N and slot#N+1 when occupying three symbols, and rep typeB does not support cross-slot transmission, PUSCH/PUCCH0Rep#1 can occupy the last two symbols of Slot#N for transmission.

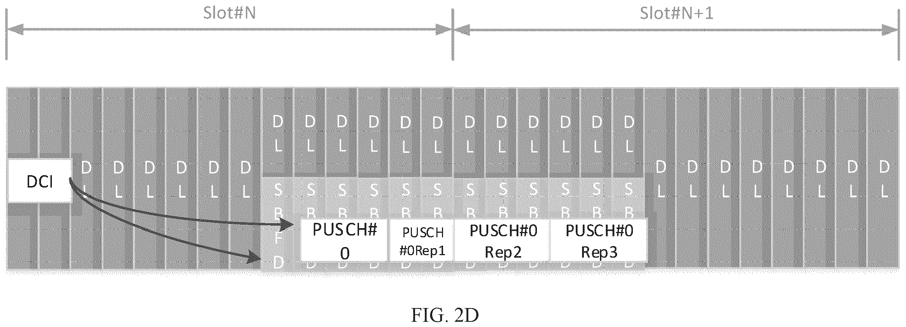

As shown in FIG. 2D, FIG. 2D is another schematic diagram of transmitting dynamically scheduled PUSCH/PUCCH when configuring SBFD time-frequency resources semi-statically, the principle is similar to that of FIG. 2C, and will not be repeated here.

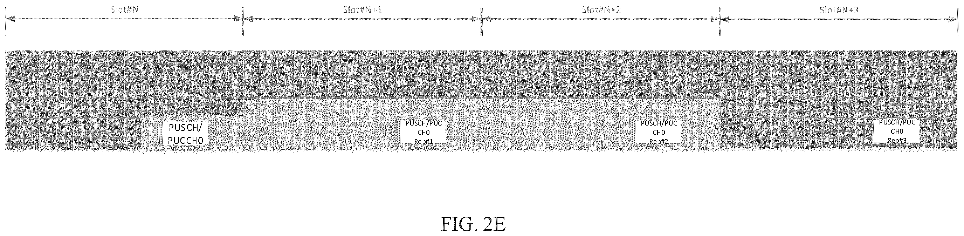

As shown in FIG. 2E, FIG. 2E is a schematic diagram of transmitting grant-free (i.e., non-dynamically scheduled) PUSCH or semi-statically scheduled PUCCH with rep type A when semi-statically configuring SBFD time-frequency resources. The user equipment sends uplink data corresponding to grant-free (non-dynamically scheduled) PUSCH or semi-static PUCCH on the SBFD time-frequency resource, and PUSCH/PUCCH has TypeA repeated transmission mechanism (repeated transmission times M=4 times). Since all four repeated transmissions of PUSCH/PUCCHO (the Oth transmission resource of PUSCH/PUCCH) are in SBFD time-frequency resources and UL symbols, all these uplink data can be transmitted.

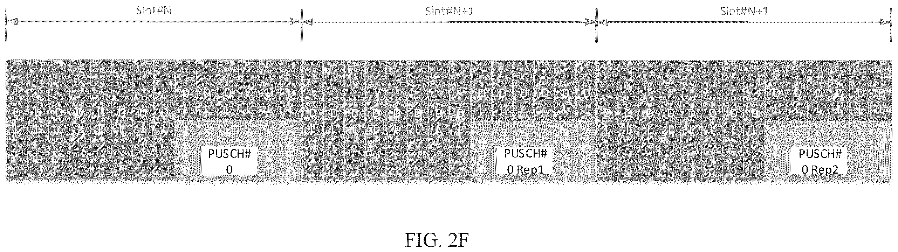

As shown in FIG. 2F, FIG. 2F is another schematic diagram of transmitting grant-free PUSCH or semi-statically scheduled PUCCH when configuring SBFD time-frequency resources semi-statically, the principle is similar to that of FIG. 2E, and will not be repeated here.

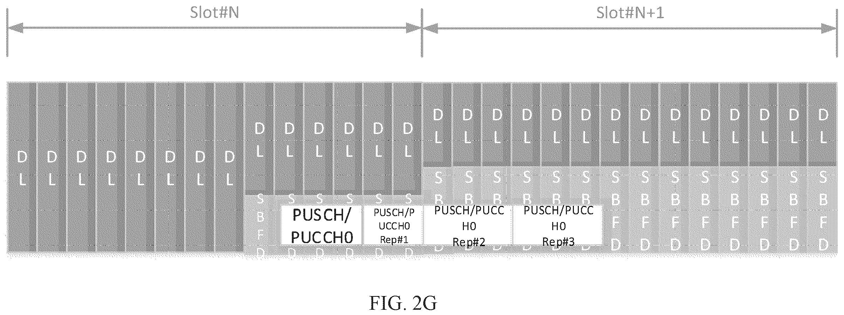

As shown in FIG. 2G, FIG. 2G is a schematic diagram of transmitting grant-free (i.e., non-dynamically scheduled) PUSCH or semi-statically scheduled PUCCH with rep typeB when semi-statically configuring SBFD time-frequency resources. The user equipment sends uplink data corresponding to grant-free (non-dynamically scheduled) PUSCH or semi-static PUCCH on the SBFD time-frequency resource, and PUSCH/PUCCH has TypeB repeated transmission mechanism (repeated transmission times M=4 times).

Since all four repeated transmissions of PUSCH/PUCCHO are in SBFD time-frequency resources and UL symbols, all these uplink data can be transmitted.

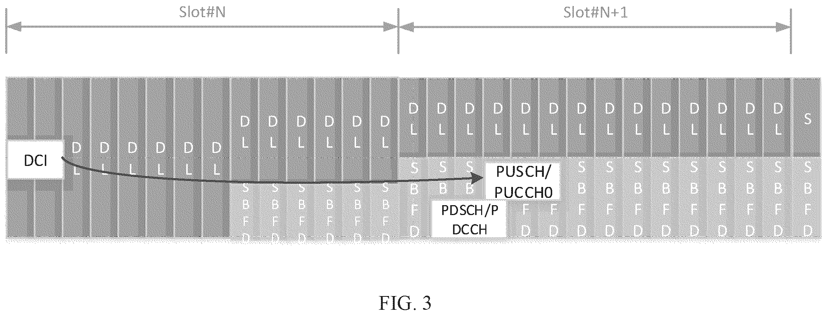

2. There is a conflict between uplink resources occupied by the uplink channel and downlink resources occupied by the downlink channel (time-domain resources overlap). For example, when the SBFD time-frequency resource is set to UL, and both the uplink resources occupied by the uplink channel and the downlink resources occupied by the downlink channel are in the SBFD time-frequency resource (as shown in FIG. 3, FIG. 3 is a schematic diagram of the conflict between the uplink channel and the downlink channel within the SBFD time-frequency resource), then in order to deal with the conflict between the uplink resources occupied by the uplink channel and the downlink resources occupied by the downlink channel, following manners may be adopted.

Manner 1: when the SBFD time-frequency resource is set to UL, not allowing the downlink channel to be transmitted within the SBFD time-frequency resource. In manner 1, for a full-duplex UE, uplink data corresponding to the uplink channel is sent on the available time-frequency resource of the SBFD time-frequency resource, and downlink data corresponding to the downlink channel is forbidden to be received through the SBFD time-frequency resource. For a half-duplex UE, uplink data corresponding to the uplink channel is sent on the available time-frequency resource of the SBFD, and downlink data corresponding to the downlink channel is forbidden to be received through the SBFD time-frequency resource.

Manner 2: for different user equipments, when one user equipment transmits the uplink data corresponding to the uplink channel (such as PUSCH/PUCCH) and the other user equipment transmits the downlink data corresponding to the downlink channel (such as PDSCH/PDC/CSI-RS), the base station can ensure that the uplink and downlink are free from interference or the interference is controllable through scheduling, so transmission is allowed in the uplink and downlink channels at the same time, that is, one user equipment sends the uplink data corresponding to the uplink channel on the available time-frequency resources of SBFD, and the other user equipment receives the downlink data corresponding to the downlink channel on the available time-frequency resources of SBFD.

Manner 3: for one user equipment, when the user equipment has uplink data and downlink data to be transmitted at the same time, and the base station allows the user equipment to transmit uplink data and downlink data in SBFD time-frequency resources, then for a full-duplex UE, it is allowed to transmit uplink data and downlink data at the same time, that is, the full-duplex UE can send the uplink data corresponding to the uplink channel on the available time-frequency resource of the SBFD time-frequency resource, and receive downlink data corresponding to the downlink channel through the SBFD time-frequency resource.

Manner 4: for one user equipment, when the user equipment has uplink data and downlink data to be transmitted at the same time, and the base station allows the user equipment to transmit uplink data and downlink data in SBFD time-frequency resources, then for a half-duplex UE, based on channel types of the uplink channel and the downlink channel, the half-duplex UE can send the uplink data corresponding to the uplink channel on the available time-frequency resource of the SBFD time-frequency resource, and be forbidden to receive the downlink data corresponding to the downlink channel through the SBFD time-frequency resource; or, based on channel types of the uplink channel and downlink channel, the half-duplex UE can be forbidden to send the uplink data corresponding to the uplink channel on the available time-frequency resource of the SBFD time-frequency resource, and can receive the downlink data corresponding to the downlink channel through the SBFD time-frequency resource.

In an example, a channel processing priority corresponding to a channel type of the uplink channel and a channel processing priority corresponding to a channel type of the downlink channel can be configured, and based on this, when the channel processing priority of the uplink channel is greater than the channel processing priority of the downlink channel, the uplink data corresponding to the uplink channel can be sent on the available time-frequency resource, and the downlink data corresponding to the downlink channel can be forbidden to be received through the SBFD time-frequency resource; or, when the channel processing priority of the uplink channel is smaller than the channel processing priority of the downlink channel, the uplink data corresponding to the uplink channel can be forbidden to be sent on the available time-frequency resource, and the downlink data corresponding to the downlink channel can be received through the SBFD time-frequency resource.

In an example, the channel processing priorities corresponding to different channel types can be configured according to experience, and there is no restriction on the channel processing priority. For example, a priority order of the channel processing priorities corresponding to each channel type can be SSB > PDCCH > PUCCH > CSI-RS > PDSCH/PUSCH, or, the priority order can be PDCCH > PUCCH > SSB > CSI-RS > PDSCH/PUSCH, or the priority order can be PDCCH > PUCCH > CSI-RS > PDSCH > SSB > PUSCH. Certainly, the above are just a few examples of the priority order, which is not limited and can be configured according to experience.

It is taken as an example that the priority order is SSB > PDCCH > PUCCH > CSI-RS > PDSCH/PUSCH, and when the channel type of the uplink channel is PUSCH type or PUCCH type, and the channel type of the downlink channel is SSB type or PDCCH type, the uplink data corresponding to the uplink channel is forbidden to be sent on the available time-frequency resources of SBFD, and the downlink data corresponding to the downlink channel is received through the SBFD time-frequency resource. When the channel type of the uplink channel is a PUCCH type, and the channel type of the downlink channel is a CSI-RS type or a PDSCH type, the uplink data corresponding to the uplink channel can be sent on the available time-frequency resource of the SBFD time-frequency resource, and the downlink data corresponding to the downlink channel can be forbidden to be received through the SBFD time-frequency resource. When the channel type of the uplink channel is the PUSCH type, and the channel type of the downlink channel is the CSI-RS type, the uplink data corresponding to the uplink channel is forbidden to be sent on the available time-frequency resource of the SBFD time-frequency resource, and the downlink data corresponding to the downlink channel can be received through the SBFD time-frequency resource.

In the above priority order, PDSCH/PUSCH represents that the channel processing priorities of PDSCH and PUSCH are the same, and an order of PDSCH and PUSCH can also be determined in the following ways.

When the channel type of the uplink channel is the PUSCH type, and the channel type of the downlink channel is the PDSCH type, then: when the uplink channel is dynamically scheduled and the downlink channel is semi-statically scheduled, the uplink data corresponding to the uplink channel can be sent on the available time-frequency resource of the SBFD time-frequency resource, and the downlink data corresponding to the downlink channel can be forbidden to be received through the SBFD time-frequency resource. When the uplink channel is semi-statically scheduled and the downlink channel is dynamically scheduled, the uplink data corresponding to the uplink channel can be forbidden to be sent on the available time-frequency resource of the SBFD time-frequency resource, and the downlink data corresponding to the downlink channel can be received through the SBFD time-frequency resource.

When the uplink channel and the downlink channel are both dynamically scheduled, or the uplink channel and the downlink channel are both semi-statically scheduled, and when a first service priority corresponding to the uplink channel is higher than a second service priority corresponding to the downlink channel, the uplink data corresponding to the uplink channel can be sent on the available time-frequency resource of the SBFD time-frequency resource, and the downlink data corresponding to the downlink channel can be forbidden to be received through the SBFD time-frequency resource. When the first service priority corresponding to the uplink channel is smaller than the second service priority corresponding to the downlink channel, the uplink data corresponding to the uplink channel can be forbidden to be sent on the available time-frequency resource of the SBFD time-frequency resource, and the downlink data corresponding to the downlink channel can be received through the SBFD time-frequency resource. The first service priority is PHY channel priority and the second service priority is PHY channel priority, or, the first service priority is MAC channel priority and the second service priority is MAC channel priority.

In an example, when the first service priority corresponding to the uplink channel is same as the second service priority corresponding to the downlink channel, then: when a time sequence corresponding to the uplink channel is earlier than a time sequence corresponding to the downlink channel (for example, a first symbol occupied by the uplink channel is ahead of a first symbol occupied by the downlink channel), then the uplink data corresponding to the uplink channel can be sent on the available time-frequency resource of the SBFD time-frequency resource, and the downlink data corresponding to the downlink channel can be forbidden to be received through the SBFD time-frequency resource. When the time sequence corresponding to the uplink channel is later than the time sequence corresponding to the downlink channel (for example, a first symbol occupied by the uplink channel is behind a first symbol occupied by the downlink channel), then the uplink data corresponding to the uplink channel can be forbidden to be sent on the available time-frequency resource of the SBFD time-frequency resource, and the downlink data corresponding to the downlink channel can be received through the SBFD time-frequency resource.

In another example, a random order can be adopted, that is, randomly picking one of the uplink channel or the downlink channel. When the uplink channel is selected, the uplink data corresponding to the uplink channel can be sent on the available time-frequency resource of the SBFD time-frequency resource, and the downlink data corresponding to the downlink channel can be forbidden to be received through the SBFD time-frequency resource. When the downlink channel is selected, uplink data corresponding to the uplink channel is forbidden to be sent on the available time-frequency resource of the SBFD, and downlink data corresponding to the downlink channel can be received through the SBFD time-frequency resource.

Manner 5, for one user equipment, when the user equipment has uplink data and downlink data to be transmitted at the same time, and the base station allows the user equipment to transmit uplink data and downlink data in SBFD time-frequency resources, for a half-duplex UE, when the uplink resource occupied by the uplink channel and the downlink resource occupied by a downlink channel are both within the SBFD time-frequency resource, a target uplink resource not occupied by the downlink resource can be selected from the uplink resources (i.e., uplink resources of available time-frequency resources of the SBFD time-frequency resources), and the uplink data corresponding to the uplink channel can be sent on the target uplink resource; a target downlink resource not occupied by the uplink resource can be selected from the downlink resources (downlink resources of the SBFD time-frequency resources), and downlink data corresponding to the downlink channel can be received on the target downlink resource.

In an example, overlapping resources of the uplink resource and the downlink resource can be determined, and the overlapping resources can be excluded from the uplink resource, and the uplink resources after the overlapping resources are excluded can be determined as the target uplink resource, and uplink data corresponding to the uplink channel can be sent through the target uplink resource. During transmission of the uplink data corresponding to the uplink channel, initial uplink data corresponding to the uplink channel can be performed with rate matching to obtain target uplink data after rate matching, and the target uplink data corresponding to the uplink channel can be sent on the target uplink resource.

During performing rate matching on initial uplink data corresponding to the uplink channel, part of data can be selected from the initial uplink data and determined as the target uplink data, or, high channel coding rate processing can be performed on the initial uplink data to obtain the target uplink data; or, high-order modulation can be performed on the initial uplink data to obtain the target uplink data.

In an example, overlapping resources of the uplink resource and the downlink resource can be determined, and the overlapping resources can be excluded from the downlink resource, and the downlink resources after the overlapping resources are excluded can be determined as the target downlink resource, and downlink data corresponding to the downlink channel can be received through the target uplink resource by the half-duplex UE.

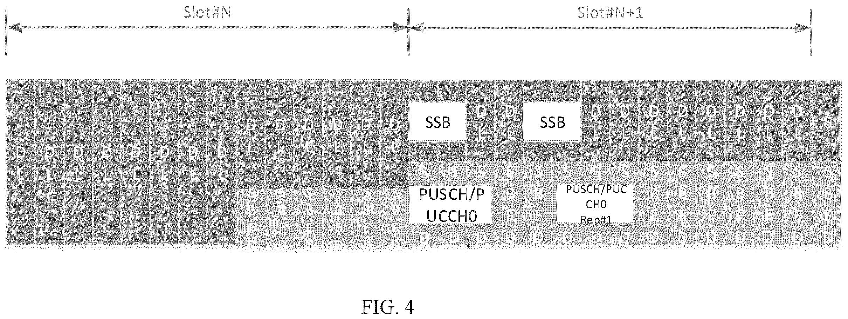

3. There is a conflict between uplink resources occupied by the uplink channel and downlink resources occupied by the downlink channel (time-domain resources overlap). For example, when the SBFD time-frequency resource is set to UL, and the uplink resources occupied by the uplink channel (PUSCH/PUCCH) are in the SBFD time-frequency resource, and the downlink resources occupied by the downlink channel (such as SBB, etc.) are outside the SBFD time-frequency resource (as shown in FIG. 4, FIG. 4 is a schematic diagram of the conflict between the uplink channel within the SBFD time-frequency resource and the SBB outside the SBFD time-frequency resource), then in order to deal with the conflict between the uplink resources occupied by the uplink channel and the downlink resources occupied by the SSB, following manners may be adopted.

Manner 1: for a full-duplex UE, it is allowed to transmit uplink data and downlink data at the same time, that is, the full-duplex UE can send the uplink data corresponding to the uplink channel on the available time-frequency resource of the SBFD time-frequency resource, and receive SBB through downlink resources outside the SBFD time-frequency resource. As shown in FIG. 4, for the full-duplex UE, uplink data corresponding to the PUSCH/PUCCHO and PUSCH/PUCCHO Rep#1 can be sent through the SBFD time-frequency resource, and SSB can be received at the same time.

Manner 2: for a half-duplex UE, when the uplink resource occupied by the uplink channel is within the SBFD time-frequency resource, a downlink resource occupied by a SSB is outside the SBFD time-frequency resource, and the downlink resource occupied by the SSB overlaps with the SBFD time-frequency resource, the uplink data corresponding to the uplink channel can be forbidden to be sent on the available time-frequency resource of the SBFD time-frequency resource; and SSB corresponding to the downlink channel can be received through the downlink resource.

In manner 2, the half-duplex UE receives the SSB, but does not send the uplink data on the uplink channel. As shown in FIG. 4, for the half-duplex UE, the half-duplex UE will not send the uplink data corresponding to the PUSCH/PUCCHO and the PUSCH/PUCCHO Rep#1 through the SBFD time-frequency resource, but will receive the SSB.

Manner 3: for a half-duplex UE, when the uplink resource occupied by the uplink channel is within the SBFD time-frequency resource, the downlink resource occupied by the SSB is outside the SBFD time-frequency resource, and the downlink resource occupied by the SSB does not overlap with the SBFD time-frequency resource, then the SSB can be received in priority, and when the SSB does not need to be received, uplink data can be sent on the uplink channel, and the base station needs to blind detect the uplink data corresponding to the uplink channel. For example, the SSB corresponding to the downlink channel can be received through the downlink resource; and when the SSB does not need to be received through the downlink resource, the uplink data corresponding to the uplink channel can be sent on the available time-frequency resource. As shown in FIG. 4, when the SSB does not need to be received through the downlink resource, the uplink data corresponding to the PUSCH/PUCCHO and PUSCH/PUCCHO Rep#1 can be sent through the SBFD time-frequency resource.

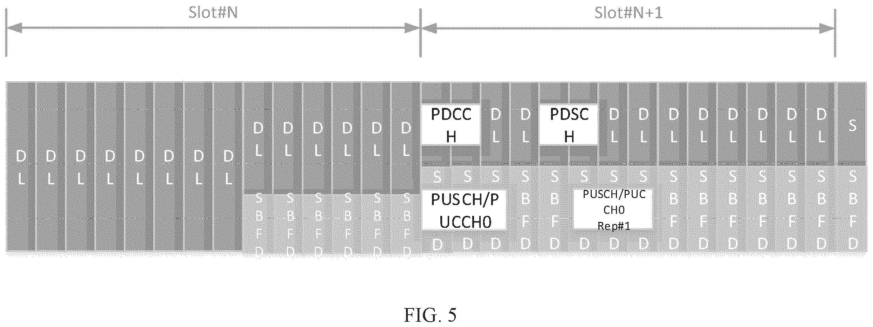

4. There is a conflict between uplink resources occupied by the uplink channel and downlink resources occupied by the downlink channel (time-domain resources overlap). For example, when the SBFD time-frequency resource is set to UL, and the uplink resources occupied by the uplink channel are in the SBFD time-frequency resource, the downlink resources occupied by the downlink channel are outside the SBFD time-frequency resource, and the downlink resources occupied by the downlink channel and the SBFD time-frequency resources occupied by the uplink channel overlap (i.e., the two have same slots) (as shown in FIG. 5, FIG. 5 is a schematic diagram of the conflict between the uplink channel in the SBFD time-frequency resource and the downlink channel outside of the SBFD time-frequency resource), then in order to deal with the conflict between the uplink resources occupied by the uplink channel and the downlink resources occupied by the downlink channel, following manners may be adopted.

Manner 1: for different user equipments, when one user equipment transmits the uplink data corresponding to the uplink channel (such as PUSCH/PUCCH) and the other user equipment transmits the downlink data corresponding to the downlink channel (such as PDSCH/PDC/CSI-RS), the base station can ensure that the uplink and downlink are free from interference or the interference is controllable through scheduling, so the uplink and downlink channels are allowed to transmit data at the same time, that is, one user equipment can send the uplink data corresponding to the uplink channel on the available time-frequency resources of SBFD, and the other user equipment can receive the downlink data corresponding to the downlink channel on the downlink resource.

Manner 2: for one user equipment, when the user equipment has uplink data and downlink data to be transmitted at the same time, then for a full-duplex UE, it is allowed to transmit uplink data and downlink data at the same time, that is, the full-duplex UE can send the uplink data corresponding to the uplink channel on the available time-frequency resource of the SBFD time-frequency resource, and receive downlink data corresponding to the downlink channel through the downlink resource.

Manner 3: for one user equipment, when the user equipment has uplink data and downlink data to be transmitted at the same time, then for a half-duplex UE, based on channel types of the uplink channel and the downlink channel, the half-duplex UE can send the uplink data corresponding to the uplink channel on the available time-frequency resource of the SBFD time-frequency resource, and be forbidden to receive the downlink data corresponding to the downlink channel through the downlink resource; or, based on channel types of the uplink channel and downlink channel, the half-duplex UE can be forbidden to send the uplink data corresponding to the uplink channel on the available time-frequency resource of the SBFD time-frequency resource, and receive the downlink data corresponding to the downlink channel through the downlink resource.

In an example, a channel processing priority corresponding to a channel type of the uplink channel and a channel processing priority corresponding to a channel type of the downlink channel can be configured, and based on this, when the channel processing priority of the uplink channel is greater than the channel processing priority of the downlink channel, the uplink data corresponding to the uplink channel can be sent on the available time-frequency resource, and the downlink data corresponding to the downlink channel can be forbidden to be received through the downlink resource; or, when the channel processing priority of the uplink channel is smaller than the channel processing priority of the downlink channel, the uplink data corresponding to the uplink channel can be forbidden to be sent on the available time-frequency resource, and the downlink data corresponding to the downlink channel can be received through the downlink resource.

In an example, the channel processing priorities corresponding to different channel types can be configured according to experience, and there is no restriction on the channel processing priority. For example, a priority order of the channel processing priorities corresponding to each channel type can be SSB > PDCCH > PUCCH > CSI-RS > PDSCH/PUSCH, or, the priority order can be PDCCH > PUCCH > SSB > CSI-RS > PDSCH/PUSCH, or the priority order can be PDCCH > PUCCH > CSI-RS > PDSCH > SSB > PUSCH.

It is taken as an example that the priority order is SSB > PDCCH > PUCCH > CSI-RS > PDSCH/PUSCH, and when the channel type of the uplink channel is PUSCH type or PUCCH type, and the channel type of the downlink channel is SSB type or PDCCH type, the uplink data corresponding to the uplink channel is forbidden to be sent on the available time-frequency resources of SBFD, and the downlink data corresponding to the downlink channel is received through the downlink resource. When the channel type of the uplink channel is a PUCCH type, and the channel type of the downlink channel is a CSI-RS type or a PDSCH type, the uplink data corresponding to the uplink channel can be sent on the available time-frequency resource of the SBFD time-frequency resource, and the downlink data corresponding to the downlink channel can be forbidden to be received through the downlink resource. When the channel type of the uplink channel is the PUSCH type, and the channel type of the downlink channel is the CSI-RS type, the uplink data corresponding to the uplink channel is forbidden to be sent on the available time-frequency resource of the SBFD time-frequency resource, and the downlink data corresponding to the downlink channel can be received through the downlink resource.

PDSCH/PUSCH represents that the PDSCH and PUSCH have same channel processing priorities, and following manners can be adopted to determine a sequence of the PDSCH and the PUSCH: when the channel type of the uplink channel is the PUSCH type, and the channel type of the downlink channel is the PDSCH type, and when the uplink channel is dynamically scheduled and the downlink channel is semi-statically scheduled, the uplink data corresponding to the uplink channel can be sent on the available time-frequency resource of the SBFD time-frequency resource, and the downlink data corresponding to the downlink channel can be forbidden to be received through the downlink resource. When the uplink channel is semi-statically scheduled and the downlink channel is dynamically scheduled, the uplink data corresponding to the uplink channel can be forbidden to be sent on the available time-frequency resource of the SBFD time-frequency resource, and the downlink data corresponding to the downlink channel can be received through the downlink resource.

When the uplink channel and the downlink channel are both dynamically scheduled, or the uplink channel and the downlink channel are both semi-statically scheduled, and when a first service priority corresponding to the uplink channel is higher than a second service priority corresponding to the downlink channel, the uplink data corresponding to the uplink channel can be sent on the available time-frequency resource of the SBFD time-frequency resource, and the downlink data corresponding to the downlink channel can be forbidden to be received through the downlink time-frequency resource. When the first service priority corresponding to the uplink channel is smaller than the second service priority corresponding to the downlink channel, the uplink data corresponding to the uplink channel can be forbidden to be sent on the available time-frequency resource of the SBFD time-frequency resource, and the downlink data corresponding to the downlink channel can be received through the downlink resource. The first service priority is PHY channel priority and the second service priority is PHY channel priority, or, the first service priority is MAC channel priority and the second service priority is MAC channel priority.

In an example, when the first service priority corresponding to the uplink channel is same as the second service priority corresponding to the downlink channel, then: when a time sequence corresponding to the uplink channel is earlier than a time sequence corresponding to the downlink channel (for example, a first symbol occupied by the uplink channel is ahead of a first symbol occupied by the downlink channel), then the uplink data corresponding to the uplink channel can be sent on the available time-frequency resource of the SBFD time-frequency resource, and the downlink data corresponding to the downlink channel can be forbidden to be received through the downlink resource. When the time sequence corresponding to the uplink channel is later than the time sequence corresponding to the downlink channel (for example, a first symbol occupied by the uplink channel is behind a first symbol occupied by the downlink channel), then the uplink data corresponding to the uplink channel can be forbidden to be sent on the available time-frequency resource of the SBFD time-frequency resource, and the downlink data corresponding to the downlink channel can be received through the downlink resource.

In another example, a random order can be adopted, that is, randomly picking one of the uplink channel or the downlink channel. When the uplink channel is selected, the uplink data corresponding to the uplink channel can be sent on the available time-frequency resource of the SBFD time-frequency resource, and the downlink data corresponding to the downlink channel can be forbidden to be received through the downlink resource. When the downlink channel is selected, uplink data corresponding to the uplink channel is forbidden to be sent on the available time-frequency resource of the SBFD, and downlink data corresponding to the downlink channel can be received through the downlink resource.

Manner 4: for one user equipment, when the user equipment has uplink data and downlink data to be transmitted, for a half-duplex UE, a target uplink resource not occupied by the downlink resource can be selected from the uplink resources (in the SBFD time-frequency resource) occupied by the uplink channel, and uplink data corresponding to the uplink channel is sent on the target uplink resource; a target downlink resource not occupied by the uplink resource is selected from the downlink resources (outside the SBFD time-frequency resource) occupied by the downlink channel, and downlink data corresponding to the downlink channel is received on the target downlink resource.

In an example, overlapping resources of the uplink resource and the downlink resource can be determined, and the overlapping resources can be excluded from the uplink resource, and the uplink resources after the overlapping resources are excluded can be determined as the target uplink resource, and uplink data corresponding to the uplink channel can be sent through the target uplink resource. During transmission of the uplink data corresponding to the uplink channel, initial uplink data corresponding to the uplink channel can be performed with rate matching to obtain target uplink data after rate matching, and the target uplink data corresponding to the uplink channel can be sent on the target uplink resource.

During performing rate matching on initial uplink data corresponding to the uplink channel, part of data can be selected from the initial uplink data and determined as the target uplink data, or, high channel coding rate processing can be performed on the initial uplink data to obtain the target uplink data; or, high-order modulation can be performed on the initial uplink data to obtain the target uplink data.

In an example, overlapping resources of the uplink resource and the downlink resource can be determined, and the overlapping resources can be excluded from the downlink resource, and the downlink resources after the overlapping resources are excluded can be determined as the target downlink resource, and downlink data corresponding to the downlink channel can be received through the target uplink resource by the half-duplex UE.

As shown in FIG. 5, for a full-duplex UE, uplink data corresponding to PUSCH/PUCCHO and PUSCH/PUCCHO Rep#1 and downlink data corresponding to PDCCH/PDSCH can be sent and received at the same time. For a half-duplex UE, when receiving PDCCH, for PDSCH and PUSCH/PUCCHO Rep#1, a determining criteria (dynamic > semi-static) of the PDSCH/PUSCH can be used. When both are dynamic or semi-static, it can be processed according to PHY channel priority and MAC channel priority, or can be avoided through base station scheduling.

Case 2: In the FD mode of TDD, for transmission procedure of uplink data in connected state, the uplink data corresponding to the uplink channel (PUSCH/PUCCH) can be transmitted in the dynamically configured SBFD time-frequency resources.

Base station can dynamically configure SBFD time-frequency resources through DCI signaling, and set the SBFD time-frequency resources as uplink transmission or Flexible transmission, that is, SBFD time-frequency resources can be used for uplink transmission or Flexible transmission. For a full-duplex UE supporting SBFD time-frequency resources, the full-duplex UE can use SBFD time-frequency resources to send uplink data corresponding to the uplink channel, and the full-duplex UE does not need to consider whether there is a downlink channel overlapping with the uplink channel in time-domain resources, and does not need to consider the DL/UL switching time. For a half-duplex UE supporting SBFD time-frequency resources, when there is no downlink channel overlapping with the uplink channel in time-domain resources (and slots in SBFD time-frequency resources do not overlap with slots in the downlink time-frequency resources, that is, the slots are different), or when the DL/UL switching time allows, the half-duplex UE can use SBFD time-frequency resources to send uplink data corresponding to the uplink channel. When the full-duplex UE or the half-duplex UE uses SBFD time-frequency resources to send uplink data corresponding to the uplink channel, base station can use SBFD time-frequency resources to receive uplink data corresponding to the uplink channel.

Implementation process of case 2 is similar to that of case 1, which will not be repeated here.

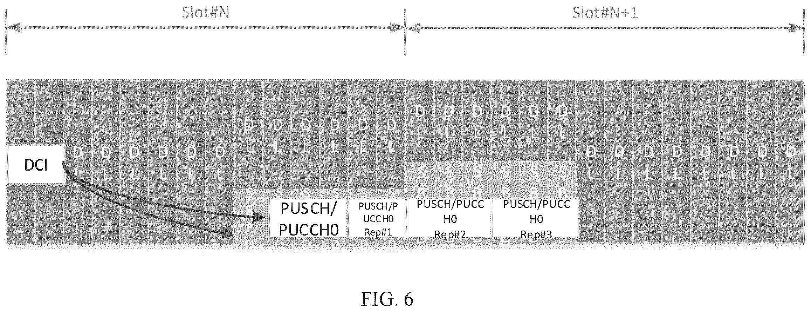

As shown in FIG. 6, FIG. 6 is a schematic diagram of dynamically configuring the uplink channel when the SBFD time-frequency resource is dynamically configured. The SBFD time-frequency resource and the PUSCH (i.e., the uplink channel) may be dynamically configured and scheduled through same DCI. Certainly, different DCI may also be used for scheduling, which is not limited here. For the uplink channel, the four repeated transmissions corresponding to the PUSCH/PUCCH are all in the SBFD time-frequency resource, thus, all of the four repeated transmissions corresponding to PUSCH/PUCCH can be transmitted.

Case 3: In the FD mode of TDD, for transmission procedure of uplink data in idle/non-connected state, the uplink data corresponding to the uplink channel (PUSCH/PUCCH) can be transmitted in the semi-statically configured SBFD time-frequency resources.

### 1. Transmission criteria of uplink channel (PUSCH/PUCCH).

For transmission criteria of grant-free CG PUSCH. In the idle/non-connected state, when the base station configures the semi-static SBFD time-frequency resources for the user equipment, SIB (RRC broadcast message)/RRC released message (RRC dedicated signaling)/DCI can be used for configuration, and at the same time the transmission resources of the grant-free CG PUSCH are configured. When the transmission resources of the grant-free CG PUSCH are configured to fall within the SBFD time-frequency resource, and the SBFD time-frequency resource is set to UL, then the user equipment can use the grant-free CG PUSCH in the SBFD time-frequency resource to transmit uplink data. In addition, when the base station schedules repeated transmission of the uplink data corresponding to the grant-free CG PUSCH, uplink data corresponding to the re-transmitted PUSCH in the SBFD time-frequency resources can be scheduled, thereby reducing the uplink transmission latency.

RRC broadcast message represents RRC broadcast message, RRC release message represents RRC release message, and RRC dedicated signaling represents RRC dedicated signaling.

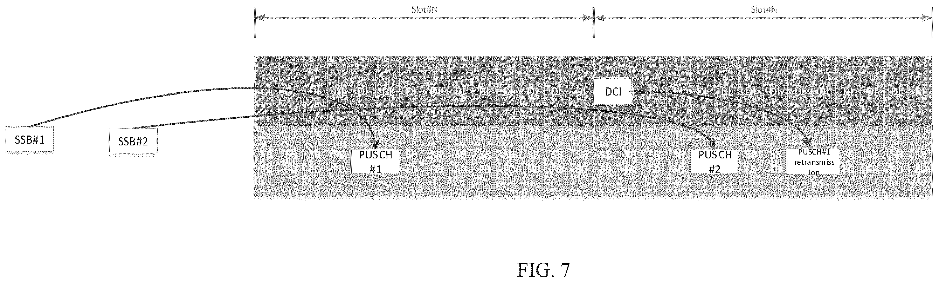

In the idle/non-connected state, as shown in FIG. 7, FIG. 7 is a schematic diagram of configuring grant-free CG PUSCH based on semi-static SBFD time-frequency resource. In configuration of the grant-free CG PUSCH, PUSCH#1 corresponds to SSB#1, PUSCH#2 corresponds to SSB#2, both the PUSCH#1 and PUSCH#2 are within the SBFD time-frequency resources, and both the PUSCH#1 and PUSCH#2 are valid transmission resources of grant-free CG PUSCH. When the base station does not successfully receive uplink data corresponding to the PUSCH#1, the base station can schedule repeated transmission of data on the PUSCH#1 through DCI, and re-transmitted PUSCH can use the SBFD time-frequency resource.

In an example, for a full-duplex UE and a half-duplex UE, uplink data corresponding to the uplink channel is sent on the SBFD time-frequency resource, and a plurality of uplink channels can be acquired. The uplink channels may include uplink channels in the SBFD time-frequency resource and/or uplink channels in the uplink time-frequency resource. That is, during matching mapping relations between the uplink channels and the SSB, it does not need to be distinguished whether the uplink channel belongs to the SBFD time-frequency resource or the uplink time-frequency resource, and all uplink channels can be found based on a sequence. An SSB set and SSB ratio configuration can be acquired from the base station. The SSB set may include multiple SSBs, such as SSB1 and SSB2, and the SSB ratio configuration may include the ratio relationship of the multiple SSBs, such as 1: 2.

For each uplink channel, a target SSB corresponding to the uplink channel can be determined based on the SSB set and SSB ratio configuration. For example, when the SSB set includes SSB1 and SSB2, and SSB ratio configuration is 1:2, all uplink channels correspond to SSB1, SSB2, SSB2, SSB1, SSB2, SSB2, and so on. Therefore, the first uplink channel corresponds to SSB1, the second uplink channel corresponds to SSB2, the third uplink channel corresponds to SSB2, the fourth uplink channel corresponds to SSB1, the fifth uplink channel corresponds to SSB2, the sixth uplink channel corresponds to SSB2, and so on. The uplink channels may include uplink channels located in SBFD time-frequency resources or uplink channels located in uplink time-frequency resources, which is not limited.

For each uplink channel, the uplink data corresponding to the uplink channel can be sent on the available time-frequency resources based on a matching beam corresponding to a target SSB corresponding to the uplink channel, and the process will not be described in detail.

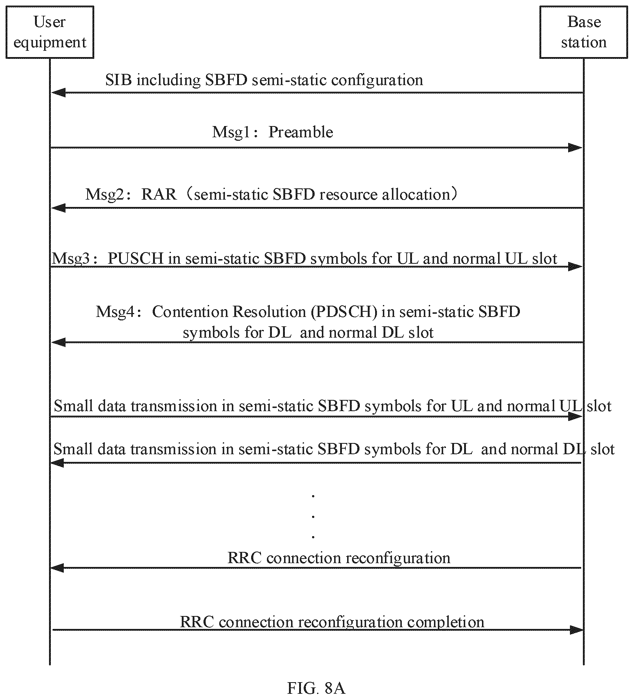

For PUSCH/PUCCH transmission based on random access. Based on semi-statically configured SBFD time-frequency resource, as shown in FIG. 8A, FIG. 8A is a flowchart of small data transmission based on 4-step random access procedure. First, the user equipment receives broadcast signaling with SBFD, where the broadcast signaling is used to semi-statically configure the SBFD time-frequency resource. Then, 4-step random access procedure is performed, that is Msg1, Msg2, Msg3 and Msg4 in FIG. 8A. When the uplink channel corresponding to Msg3 is located in the SBFD time-frequency resource, Msg3 can be transmitted through the SBFD time-frequency resource. Then, after the 4-step random access procedure is succeeded, the user equipment can use the SBFD time-frequency resource for downlink data/uplink data transmission, that is, when the uplink channel scheduled by the base station is in the SBFD time-frequency resource, the user equipment can use the SBFD time-frequency resource for uplink data transmission. The base station can also schedule legacy UE behavior on DL/UL symbols similar to PDSCH/PUSCH.

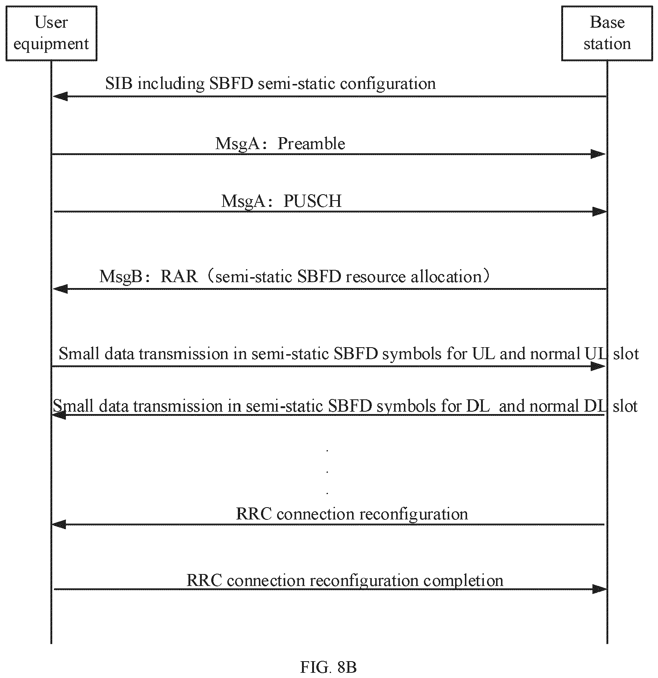

Based on semi-statically configured SBFD time-frequency resource, as shown in FIG. 8B, FIG. 8B is a flowchart of small data transmission based on 2-step random access procedure. First, the user equipment receives broadcast signaling with SBFD, where the broadcast signaling is used to semi-statically configure the SBFD time-frequency resource. Then, 2-step random access procedure is performed, that is MsgA and MsgB in FIG. 8B. When the uplink channel corresponding to MsgA is located in the SBFD time-frequency resource, MsgA can be transmitted through the SBFD time-frequency resource. Then, after the 2-step random access procedure is succeeded, the user equipment can use the SBFD time-frequency resource for downlink data/uplink data transmission, that is, when the uplink channel scheduled by the base station is in the SBFD time-frequency resource, the user equipment can use the SBFD time-frequency resource for uplink data transmission. The base station can also schedule legacy UE behavior on DL/UL symbols similar to PDSCH/PUSCH.

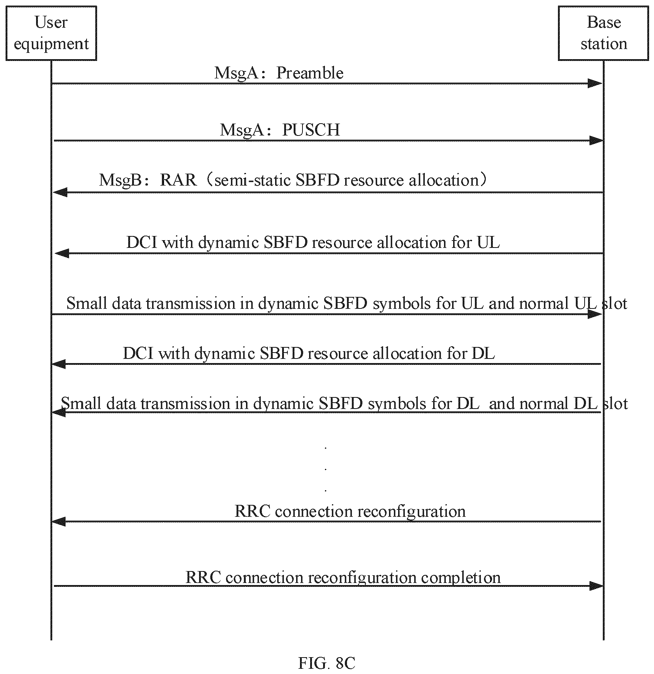

Based on dynamically configured SBFD time-frequency resource, as shown in FIG. 8C, FIG. 8C is a flowchart of small data transmission based on 2-step random access procedure. The user equipment receives broadcast signaling with SBFD, and performs 2-step random access procedure, that is MsgA and MsgB in FIG. 8C. When the uplink channel corresponding to MsgA is located in the SBFD time-frequency resource, MsgA can be transmitted through the SBFD time-frequency resource. After the 2-step random access procedure is succeeded, when the uplink channel scheduled by the base station is in the SBFD time-frequency resource, the user equipment can use the SBFD time-frequency resource for uplink data transmission. The base station can also schedule legacy UE behavior on DL/UL symbols similar to PDSCH/PUSCH.

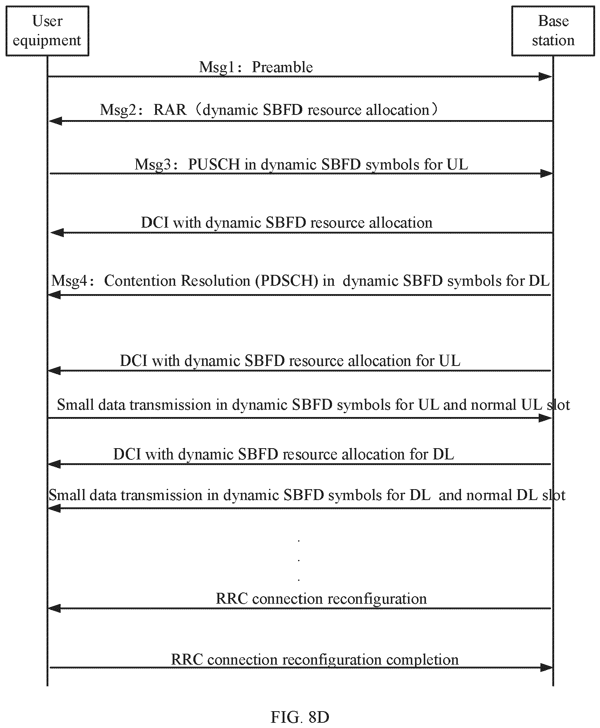

Based on dynamically configured SBFD time-frequency resource, as shown in FIG. 8D, FIG. 8D is a flowchart of small data transmission based on 4-step random access procedure. The user equipment receives broadcast signaling with SBFD, and performs 4-step random access procedure, that is Msg1, Msg2, Msg3 and Msg4 in FIG. 8D. When the uplink channel corresponding to Msg3 is located in the SBFD time-frequency resource, Msg3 can be transmitted through the SBFD time-frequency resource. After the 4-step random access procedure is succeeded, when the uplink channel is in the SBFD time-frequency resource, the user equipment can use the SBFD time-frequency resource for uplink data transmission. The base station can also schedule legacy UE behavior on DL/UL symbols similar to PDSCH/PUSCH.

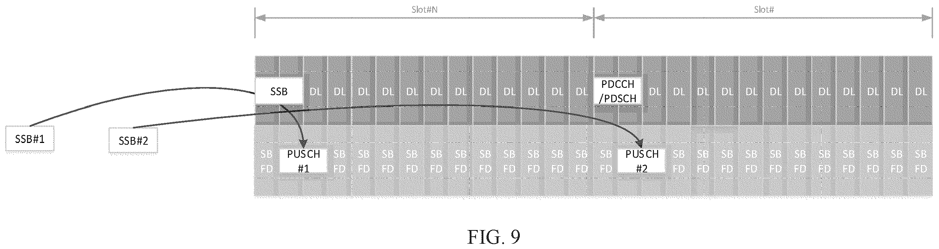

2. There is a conflict between uplink resources occupied by the uplink channel and downlink resources occupied by the downlink channel (time-domain resources overlap). For example, when the SBFD time-frequency resource is set to UL, and the uplink resources occupied by the uplink channel (PUSCH/PUCCH) are in the SBFD time-frequency resource, the downlink resources occupied by the downlink channel (such as SSB, etc.) are outside the SBFD time-frequency resource, and the downlink resources occupied by the downlink channel and the SBFD time-frequency resources occupied by the uplink channel overlap (i.e., the two have same slots) (as shown in FIG. 9, FIG. 9 is a schematic diagram of the conflict between the uplink channel in the SBFD time-frequency resource and the SSB outside of the SBFD time-frequency resource). In order to deal with the conflict between the uplink resources occupied by the uplink channel and the downlink resources occupied by the SSB, for a full-duplex UE, uplink data corresponding to the uplink channel and the SSB can be sent and received at the same time. For a half-duplex UE, the half-duplex UE will receive the SSB but will not send the uplink data corresponding to the uplink channel; or the half-duplex UE receives the SSB in priority, and when the SSB does not need to be received, sends the uplink data corresponding to the uplink channel on the SBFD time-frequency resource. When the half-duplex UE sends the uplink data corresponding to the uplink channel, the base station can blindly detect the uplink data on the uplink channel.

3. There is a conflict between uplink resources occupied by the uplink channel and downlink resources occupied by the downlink channel (time-domain resources overlap). For example, when the SBFD time-frequency resource is set to UL, and the uplink resources occupied by the uplink channel (PUSCH/PUCCH) are in the SBFD time-frequency resource, the downlink resources occupied by the downlink channel (such as SSB/PDSCH/PDCCH, etc.) are outside the SBFD time-frequency resource, and the downlink resources occupied by the downlink channel and the SBFD time-frequency resources occupied by the uplink channel overlap(as shown in FIG. 9, FIG. 9 is a schematic diagram of the conflict between the uplink channel in the SBFD time-frequency resource and the downlink channel outside of the SBFD time-frequency resource). In order to deal with the conflict between uplink resources occupied by uplink channel and downlink resources occupied by downlink channel, for a full-duplex UE, uplink data corresponding to uplink channel (PUSCH/PUCCH) and downlink data corresponding to downlink channel (PDSCH/PDC) are sent and received at the same time. For a half-duplex UE, according to the priority order of SSB > PDCCH > PUCCH > CSI-RS > PDSCH/PUSCH and the determination criteria of PDSCH/PUSCH (dynamic > semi-static, and when both are dynamic or semi-static, PHY and MAC channel priorities are based on for comparison), the uplink data corresponding to the uplink channel is sent in SBFD time-frequency resources, or the downlink data corresponding to the downlink channel is received in downlink resources.

Implementation process of case 3 is similar to that of case 1, which will not be repeated here.

Case 4: In the FD mode of TDD, for transmission procedure of uplink data in idle/non-connected state, the uplink data corresponding to the uplink channel (PUSCH/PUCCH) can be transmitted in the dynamically configured SBFD time-frequency resources.

In the idle/non-connected state, when the base station configures the dynamic SBFD time-frequency resources for the user equipment, SIB (RRC broadcast message)/RRC released message (RRC dedicated signaling)/DCI can be used for configuration. At the same time, the base station configures the grant-free CG PUSCH transmission resource. When the grant-free CG PUSCH transmission resource falls in the SBFD time-frequency resource and the SBFD time-frequency resource is set to UL, the user equipment can send the uplink data corresponding to the grant-free CG PUSCH in the SBFD time-frequency resource. When the base station schedules repeated transmission of the uplink data corresponding to the grant-free CG PUSCH, the re-transmitted PUSCH can be scheduled in the SBFD time-frequency resources, thereby reducing the uplink transmission latency.

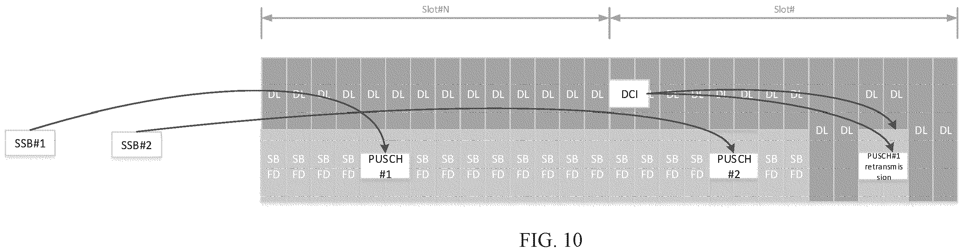

FIG. 10 is a schematic diagram of transmitting a grant-free CG PUSCH based on a semi-static/dynamic SBFD time-frequency resource under an idle/non-connected state. In configuration of grant-free CG PUSCH, PUSCH#1 corresponds to SSB#1, PUSCH#2 corresponds to SSB#2, both PUSCH#1 and PUSCH#2 are in SBFD time-frequency resources, and both PUSCH#1 and PUSCH#2 are effective grant-free CG PUSCH transmission resources. When the base station fails to successfully receive the uplink data corresponding to PUSCH#1, the uplink data retransmission on PUSCH# 1 can be scheduled through DCI, and the SBFD time-frequency resources used for PUSCH transmission are configured at the same time, and the user equipment retransmits the uplink data by using the dynamically configured SBFD time-frequency resources.

Implementation process of case 4 is similar to that of case 1, which will not be repeated here.

As can be seen from the above technical solution, uplink data corresponding to an uplink channel can be transmitted on a SBFD time-frequency resource, so as to utilize the SBFD time-frequency resource more effectively, improve resource utilization, improve network coverage and capacity, while reducing transmission latency (e.g., uplink transmission latency). In a case that the 5G system is not affected, using SBFD time-frequency resources for uplink data transmission can increase uplink data resources, thus increasing uplink throughput and cell coverage and reducing transmission latency. The transmission criteria of uplink data/control channel is given, and the transmission behavior of base station and user equipment is determined, which reduces blind detection of base station and user equipment, effectively increases uplink transmission opportunities and improves uplink transmission reliability.

Based on a same inventive concept, the disclosure also provides a data transmission apparatus corresponding to the above data transmission method, as well as a base station, a full-duplex UE and a half-duplex UE. Since the principles of solving problems of the base station, the full-duplex UE and the half-duplex UE are similar to that of the data transmission method of the above examples, the implementation of the base station, the full-duplex UE and the half-duplex UE can refer to the implementation of the method, which will not be repeated here.

Based on a same inventive concept of the above methods, the present disclosure provides a data transmission apparatus, applied in a base station, including: an allocating module, configured to, when a sub-band full-duplex (SBFD) time-frequency resource is configured as uplink transmission or flexible transmission, allocate an available time-frequency resource from the SBFD time-frequency resource; and a transmitting module, configured to receive uplink data corresponding to at least one uplink channel on the available time-frequency resource.

In an example, the SBFD time-frequency resource may be semi-statically configured; or, the SBFD time-frequency resource may be dynamically configured.

In an example, each uplink channel may be dynamically scheduled PUSCH or PUCCH; or each uplink channel may be semi-statically scheduled PUSCH or PUCCH.

In an example, the uplink data corresponding to each uplink channel is initially transmitted uplink data; or, the uplink data corresponding to each uplink channel is K-th repeatedly transmitted uplink data, where K is a positive integer.

In an example, the uplink data is in a connected state; or, the uplink data is in an idle state or an inactive state; or, the uplink data is in a random access procedure; or, the uplink data is uplink data completed with a random access procedure but not completed with a reconfiguration process.

Based on a same inventive concept of the above method, an example of the present disclosure provides a data transmission apparatus, applied to a full-duplex user equipment (UE), including: an acquiring module, configured to, when a sub-band full-duplex (SBFD) time-frequency resource is configured, by a base station, as uplink transmission or flexible transmission, acquire an available time-frequency resource allocated by the base station for the full-duplex UE from the SBFD time-frequency resource; a transmitting module, configured to, for each uplink channel, send uplink data corresponding to the uplink channel on the available time-frequency resource based on a position relation between an uplink resource occupied by the uplink channel and the SBFD time-frequency resource.

In an example, when sending uplink data corresponding to the uplink channel on the available time-frequency resource based on a position relation between an uplink resource occupied by the uplink channel and the SBFD time-frequency resource, the transmitting module is specifically configured to: when all of uplink resources occupied by the uplink channel are within the SBFD time-frequency resource, send the uplink data corresponding to the uplink channel on the available time-frequency resource.

In an example, the transmitting module is further configured to: when none of uplink resources occupied by the uplink channel is within the SBFD time-frequency resource, and the uplink resources are within an uplink symbol or an F symbol, send the uplink data corresponding to the uplink channel on an uplink resource outside the SBFD time-frequency resource.

In an example, the transmitting module is further configured to: for each uplink channel, when part of uplink resources occupied by the uplink channel is within the SBFD time-frequency resource, and rest of the uplink resources occupied by the uplink channel is within an F symbol, forbid sending the uplink data corresponding to the uplink channel on the available time-frequency resource.

In an example, when sending uplink data corresponding to the uplink channel on the available time-frequency resource based on a position relation between an uplink resource occupied by the uplink channel and the SBFD time-frequency resource, the transmitting module is specifically configured to: when part of uplink resources occupied by the uplink channel is within the SBFD time-frequency resource, and rest of the uplink resources occupied by the uplink channel is within an F symbol, send the uplink data corresponding to the uplink channel on the available time-frequency resource.

In an example, the transmitting module is further configured to: when part of uplink resources occupied by the uplink channel is within the SBFD time-frequency resource, and rest of the uplink resources occupied by the uplink channel is within a downlink symbol, forbid sending the uplink data corresponding to the uplink channel on the available time-frequency resource.

In an example, when sending uplink data corresponding to the uplink channel on the available time-frequency resource based on a position relation between an uplink resource occupied by the uplink channel and the SBFD time-frequency resource, the transmitting module is specifically configured to: when part of uplink resources occupied by the uplink channel is within the SBFD time-frequency resource, and rest of the uplink resources occupied by the uplink channel is within a downlink symbol, perform rate matching on initial uplink data corresponding to the uplink channel to obtain target uplink data, and send the target uplink data on the available time-frequency resource.

When performing rate matching on initial uplink data corresponding to the uplink channel to obtain target uplink data, the transmitting module is specifically configured to: selecting part of the initial uplink data as the target uplink data; or, performing high channel coding rate processing on the initial uplink data to obtain the target uplink data; or, performing high-order modulation on the initial uplink data to obtain the target uplink data.

When the uplink resource occupied by the uplink channel and a downlink resource occupied by a downlink channel are both within the SBFD time-frequency resource, the transmitting module is further configured to: send the uplink data corresponding to the uplink channel on the available time-frequency resource; and forbid receiving downlink data corresponding to the downlink channel through the SBFD time-frequency resource.

When the uplink resource occupied by the uplink channel and a downlink resource occupied by a downlink channel are both within the SBFD time-frequency resource, the transmitting module is further configured to: send the uplink data corresponding to the uplink channel on the available time-frequency resource; and receive downlink data corresponding to the downlink channel through the SBFD time-frequency resource.

When the uplink resource occupied by the uplink channel is within the SBFD time-frequency resource, a downlink resource occupied by a downlink channel is outside the SBFD time-frequency resource, and the downlink resource occupied by the downlink channel overlaps with the SBFD time-frequency resource, the transmitting module is further configured to: send the uplink data corresponding to the uplink channel on the available time-frequency resource; and receive downlink data corresponding to the downlink channel through the downlink resource.

In an example, when sending the uplink data corresponding to the uplink channel on the available time-frequency resource, the transmitting module is specifically configured to: acquire configured uplink channels; where the uplink channels include at least one of an uplink channel in the SBFD time-frequency resource or an uplink channel in an uplink time-frequency resource; acquire a synchronization signal block (SSB) set and SSB ratio configuration from the base station, where the SSB set includes SSBs, and the SSB ratio configuration includes ratio relations between SSBs; for each uplink channel, determine a target SSB corresponding to the uplink channel based on the SSB set and the SSB ratio configuration, and send the uplink data corresponding to the uplink channel on the available time-frequency resource based on a matched beam corresponding to the target SSB.

In an example, the SBFD time-frequency resource may be semi-statically configured; or, the SBFD time-frequency resource may be dynamically configured.

In an example, each uplink channel may be dynamically scheduled PUSCH or PUCCH; or each uplink channel may be semi-statically scheduled PUSCH or PUCCH.

In an example, the uplink data corresponding to each uplink channel is initially transmitted uplink data; or, the uplink data corresponding to each uplink channel is K-th repeatedly transmitted uplink data, where K is a positive integer.

In an example, the uplink data is in a connected state; or, the uplink data is in an idle state or an inactive state; or, the uplink data is in a random access procedure; or, the uplink data is uplink data completed with a random access procedure but not completed with a reconfiguration process.

Based on a same inventive concept of the above method, an example of the present disclosure provides a data transmission apparatus, applied to a half-duplex user equipment (UE), including: an acquiring module, configured to, when a sub-band full-duplex (SBFD) time-frequency resource is configured, by a base station, as uplink transmission or flexible transmission, acquiring an available time-frequency resource allocated by the base station for the half-duplex UE from the SBFD time-frequency resource; a transmitting module, configured to, for each uplink channel, send uplink data corresponding to the uplink channel on the available time-frequency resource based on a position relation between an uplink resource occupied by the uplink channel and the SBFD time-frequency resource.

In an example, when sending uplink data corresponding to the uplink channel on the available time-frequency resource based on a position relation between an uplink resource occupied by the uplink channel and the SBFD time-frequency resource, the transmitting module is specifically configured to: when all of uplink resources occupied by the uplink channel are within the SBFD time-frequency resource, and slots in the SBFD time-frequency resource do not overlap with slots in a downlink time-frequency resource, send the uplink data corresponding to the uplink channel on the available time-frequency resource.

In an example, the transmitting module is further configured to: when none of uplink resources occupied by the uplink channel is within the SBFD time-frequency resource, and the uplink resources are within an uplink symbol or an F symbol, send the uplink data corresponding to the uplink channel on an uplink resource outside the SBFD time-frequency resource.

In an example, the transmitting module is further configured to: when part of uplink resources occupied by the uplink channel is within the SBFD time-frequency resource, and rest of the uplink resources occupied by the uplink channel is within an F symbol, forbid sending the uplink data corresponding to the uplink channel on the available time-frequency resource.

When sending uplink data corresponding to the uplink channel on the available time-frequency resource based on a position relation between an uplink resource occupied by the uplink channel and the SBFD time-frequency resource, the transmitting module is specifically configured to: when part of uplink resources occupied by the uplink channel is within the SBFD time-frequency resource, rest of the uplink resources occupied by the uplink channel is within an F symbol, and slots in the SBFD time-frequency resource do not overlap with slots in a downlink time-frequency resource, send the uplink data corresponding to the uplink channel on the available time-frequency resource.

In an example, the transmitting module is further configured to: when part of uplink resources occupied by the uplink channel is within the SBFD time-frequency resource, and rest of the uplink resources occupied by the uplink channel is within a downlink symbol, forbid sending the uplink data corresponding to the uplink channel on the available time-frequency resource.

In an example, when sending uplink data corresponding to the uplink channel on the available time-frequency resource based on a position relation between an uplink resource occupied by the uplink channel and the SBFD time-frequency resource, the transmitting module is specifically configured to: when part of uplink resources occupied by the uplink channel is within the SBFD time-frequency resource, rest of the uplink resources occupied by the uplink channel is within a downlink symbol, and slots in the SBFD time-frequency resource do not overlap with slots in a downlink time-frequency resource, perform rate matching on initial uplink data corresponding to the uplink channel to obtain target uplink data, and send the target uplink data on the available time-frequency resource.

When performing rate matching on initial uplink data corresponding to the uplink channel to obtain target uplink data, the transmitting module is specifically configured to: selecting part of the initial uplink data as the target uplink data; or, performing high channel coding rate processing on the initial uplink data to obtain the target uplink data; or, performing high-order modulation on the initial uplink data to obtain the target uplink data.

When the uplink resource occupied by the uplink channel and a downlink resource occupied by a downlink channel are both within the SBFD time-frequency resource, the transmitting module is further configured to: send the uplink data corresponding to the uplink channel on the available time-frequency resource; and forbid receiving downlink data corresponding to the downlink channel through the SBFD time-frequency resource.

When the uplink resource occupied by the uplink channel and a downlink resource occupied by a downlink channel are both within the SBFD time-frequency resource, the transmitting module is further configured to: based on a channel type of the uplink channel and a channel type of the downlink channel, send the uplink data corresponding to the uplink channel on the available time-frequency resource, and forbid receiving downlink data corresponding to the downlink channel through the SBFD time-frequency resource; or, forbid sending the uplink data corresponding to the uplink channel on the available time-frequency resource, and receive downlink data corresponding to the downlink channel through the SBFD time-frequency resource; or select a target uplink resource not occupied by the downlink resource from the uplink resource, and send the uplink data corresponding to the uplink channel on the target uplink resource; select a target downlink resource not occupied by the uplink resource from the downlink resource, and receive downlink data corresponding to the downlink channel on the target downlink resource.

In an example, when based on a channel type of the uplink channel and a channel type of the downlink channel, the uplink data corresponding to the uplink channel on the available time-frequency resource, and forbidding receiving downlink data corresponding to the downlink channel through the SBFD time-frequency resource; or, forbidding sending the uplink data corresponding to the uplink channel on the available time-frequency resource, and receiving downlink data corresponding to the downlink channel through the SBFD time-frequency resource, the transmitting module is configured to: when the channel processing priority of the uplink channel is greater than the channel processing priority of the downlink channel, the uplink data corresponding to the uplink channel can be sent on the available time-frequency resource, and the downlink data corresponding to the downlink channel can be forbidden to be received through the SBFD time-frequency resource; or, when the channel processing priority of the uplink channel is smaller than the channel processing priority of the downlink channel, the uplink data corresponding to the uplink channel can be forbidden to be sent on the available time-frequency resource, and the downlink data corresponding to the downlink channel can be received through the SBFD time-frequency resource.

In an example, the transmitting module is further configured to: when the channel type of the uplink channel is PUSCH type or PUCCH type, and the channel type of the downlink channel is SSB type or PDCCH type, forbid sending the uplink data corresponding to the uplink channel on the available time-frequency resource , and receive the downlink data corresponding to the downlink channel through the SBFD time-frequency resource; when the channel type of the uplink channel is PUCCH type, and the channel type of the downlink channel is CSI-RS type or PDSCH type, send the uplink data corresponding to the uplink channel on the available time-frequency resource, and forbid receiving the downlink data corresponding to the downlink channel through the SBFD time-frequency resource; when the channel type of the uplink channel is PUSCH type, and the channel type of the downlink channel is CSI-RS type, forbid sending the uplink data corresponding to the uplink channel on the available time-frequency resource, and receive the downlink data corresponding to the downlink channel through the SBFD time-frequency resource.

In an example, when the channel type of the uplink channel is PUSCH type, and the channel type of the downlink channel is PDSCH type, the transmitting module is further configured to: when the uplink channel is dynamically configured and the downlink channel is semi-statically configured, send uplink data corresponding to the uplink channel on the available time-frequency resource, and forbid receiving downlink data corresponding to the downlink channel through the SBFD time-frequency resource; when the uplink channel is semi-statically configured and the downlink channel is dynamically configured, forbid sending uplink data corresponding to the uplink channel on the available time-frequency resource, and receive downlink data corresponding to the downlink channel through the SBFD time-frequency resource; when the uplink channel and the downlink channel are both dynamically scheduled, or the uplink channel and the downlink channel are both semi-statically scheduled, and when a service priority corresponding to the uplink channel is higher than a service priority corresponding to the downlink channel, send the uplink data corresponding to the uplink channel on the available time-frequency resource, and forbid receiving downlink data corresponding to the downlink channel through the SBFD time-frequency resource; when the service priority corresponding to the uplink channel is lower than the service priority of the downlink channel, forbid sending the uplink data corresponding to the uplink channel on the available time-frequency resource, and receive downlink data corresponding to the downlink channel through the SBFD time-frequency resource.

In an example, when a service priority corresponding to the uplink channel is equal to a service priority corresponding to the downlink channel, the transmitting module is further configured to: when a time sequence corresponding to the uplink channel is earlier than a time sequence corresponding to the downlink channel, send the uplink data corresponding to the uplink channel on the available time-frequency resource, and forbid receiving downlink data corresponding to the downlink channel through the SBFD time-frequency resource; when the time sequence corresponding to the uplink channel is later than the time sequence corresponding to the downlink channel, forbid sending the uplink data corresponding to the uplink channel on the available time-frequency resource, and receive downlink data corresponding to the downlink channel through the SBFD time-frequency resource; or based on a random order, send the uplink data corresponding to the uplink channel on the available time-frequency resource, and forbid receiving downlink data corresponding to the downlink channel through the SBFD time-frequency resource; or based on a random order, forbid sending the uplink data corresponding to the uplink channel on the available time-frequency resource, and receive downlink data corresponding to the downlink channel through the SBFD time-frequency resource.

In an example, when the uplink resource occupied by the uplink channel is within the SBFD time-frequency resource, the downlink resource occupied by the downlink channel is outside the SBFD time-frequency resource, and the downlink resource occupied by the downlink channel overlap with the SBFD time-frequency resource, the transmitting module is further configured to: based on a channel type of the uplink channel and a channel type of the downlink channel, send the uplink data corresponding to the uplink channel on the available time-frequency resource, and forbid receiving downlink data corresponding to the downlink channel through the downlink resource; or, forbid sending the uplink data corresponding to the uplink channel on the available time-frequency resource, and receive downlink data corresponding to the downlink channel through the downlink resource; or select a target uplink resource not occupied by the downlink resource from the uplink resource, and send the uplink data corresponding to the uplink channel on the target uplink resource; select a target downlink resource not occupied by the uplink resource from the downlink resource, and receive downlink data corresponding to the downlink channel on the target downlink resource.

In an example, when sending the uplink data corresponding to the uplink channel on the target uplink resource, the transmitting module is specifically configured to: perform rate matching on initial uplink data corresponding to the uplink channel to obtain target uplink data, and send the target uplink data on the target uplink resource.

In an example, when based on a channel type of the uplink channel and a channel type of the downlink channel, sending the uplink data corresponding to the uplink channel on the available time-frequency resource, and forbidding receiving downlink data corresponding to the downlink channel through the downlink resource; or, forbidding sending the uplink data corresponding to the uplink channel on the available time-frequency resource, and receiving downlink data corresponding to the downlink channel through the downlink resource, the transmitting module is configured to: when the channel processing priority of the uplink channel is greater than the channel processing priority of the downlink channel, the uplink data corresponding to the uplink channel can be sent on the available time-frequency resource, and the downlink data corresponding to the downlink channel can be forbidden to be received through the downlink resource; or, when the channel processing priority of the uplink channel is smaller than the channel processing priority of the downlink channel, the uplink data corresponding to the uplink channel can be forbidden to be sent on the available time-frequency resource, and the downlink data corresponding to the downlink channel can be received through the downlink resource.

In an example, the transmitting module is further configured to: when the channel type of the uplink channel is PUSCH type or PUCCH type, and the channel type of the downlink channel is SSB type or PDCCH type, forbid sending the uplink data corresponding to the uplink channel on the available time-frequency resource, receive the downlink data corresponding to the downlink channel through the downlink resource; when the channel type of the uplink channel is PUCCH type, and the channel type of the downlink channel is CSI-RS type or PDSCH type, send the uplink data corresponding to the uplink channel on the available time-frequency resource, forbid receiving the downlink data corresponding to the downlink channel through the downlink resource; when the channel type of the uplink channel is PUSCH type, and the channel type of the downlink channel is CSI-RS type, forbid sending the uplink data corresponding to the uplink channel on the available time-frequency resource, receive the downlink data corresponding to the downlink channel through the downlink resource.

In an example, when the channel type of the uplink channel is PUSCH type, and the channel type of the downlink channel is PDSCH type, the transmitting module is further configured to: when the uplink channel is dynamically scheduled and the downlink channel is semi-statically scheduled, send the uplink data corresponding to the uplink channel on the available time-frequency resource, and forbid receiving the downlink data corresponding to the downlink channel through the downlink resource; when the uplink channel is semi-statically scheduled and the downlink channel is dynamically scheduled, forbid sending the uplink data corresponding to the uplink channel on the available time-frequency resource, and receive downlink data corresponding to the downlink channel through the downlink resource; when the uplink channel and the downlink channel are both dynamically scheduled, or the uplink channel and the downlink channel are both semi-statically scheduled, and when a service priority corresponding to the uplink channel is higher than a service priority corresponding to the downlink channel, sending the uplink data corresponding to the uplink channel on the available time-frequency resource, and forbidding receiving downlink data corresponding to the downlink channel through the downlink resource; when the service priority corresponding to the uplink channel is lower than the service priority of the downlink channel, forbidding sending the uplink data corresponding to the uplink channel on the available time-frequency resource, and receiving downlink data corresponding to the downlink channel through the downlink resource.

In an example, when a service priority corresponding to the uplink channel is equal to a service priority corresponding to the downlink channel, the transmitting module is further configured to: when a time sequence corresponding to the uplink channel is earlier than a time sequence corresponding to the downlink channel, send the uplink data corresponding to the uplink channel on the available time-frequency resource, and forbid receiving downlink data corresponding to the downlink channel through the downlink resource; when the time sequence corresponding to the uplink channel is later than the time sequence corresponding to the downlink channel, forbid sending the uplink data corresponding to the uplink channel on the available time-frequency resource, and receive downlink data corresponding to the downlink channel through the downlink resource; or, based on a random sequence, send the uplink data corresponding to the uplink channel on the available time-frequency resource, and forbid receiving downlink data corresponding to the downlink channel through the downlink resource; or, based on a random sequence, forbid sending the uplink data corresponding to the uplink channel on the available time-frequency resource, and receive downlink data corresponding to the downlink channel through the downlink resource.

In an example, when the uplink resource occupied by the uplink channel is within the SBFD time-frequency resource, a downlink resource occupied by a SSB is outside the SBFD time-frequency resource, and the downlink resource occupied by the SSB overlaps with the SBFD time-frequency resource, the transmitting module is further configured to: forbid sending the uplink data corresponding to the uplink channel on the available time-frequency resource; and receive SSB corresponding to the downlink channel through the downlink resource.

In an example, when the uplink resource occupied by the uplink channel is within the SBFD time-frequency resource, the downlink resource occupied by the SSB is outside the SBFD time-frequency resource, and the downlink resource occupied by the SSB overlaps with the SBFD time-frequency resource, the transmitting module is further configured to: receive SSB corresponding to the downlink channel through the downlink resource; when the SSB does not need to be received through the downlink resource, send the uplink data corresponding to the uplink channel on the available time-frequency resource.

In an example, when sending the uplink data corresponding to the uplink channel on the available time-frequency resource, the transmitting module is specifically configured to: acquire configured uplink channels; where the uplink channels include at least one of an uplink channel in the SBFD time-frequency resource or an uplink channel in an uplink time-frequency resource; acquire a synchronization signal block (SSB) set and SSB ratio configuration from the base station, where the SSB set includes SSBs, and the SSB ratio configuration includes ratio relations between SSBs; for each uplink channel, determine a target SSB corresponding to the uplink channel based on the SSB set and the SSB ratio configuration, and send the uplink data corresponding to the uplink channel on the available time-frequency resource based on a matched beam corresponding to the target SSB.

In an example, the SBFD time-frequency resource may be semi-statically configured; or, the SBFD time-frequency resource may be dynamically configured.

In an example, each uplink channel may be dynamically scheduled PUSCH or PUCCH; or each uplink channel may be semi-statically scheduled PUSCH or PUCCH.

In an example, the uplink data corresponding to each uplink channel is initially transmitted uplink data; or, the uplink data corresponding to each uplink channel is K-th repeatedly transmitted uplink data, where K is a positive integer.

In an example, the uplink data is in a connected state; or, the uplink data is in an idle state or an inactive state; or, the uplink data is in a random access procedure; or, the uplink data is uplink data completed with a random access procedure but not completed with a reconfiguration process.

Based on a same inventive concept as the above method, an example of the present disclosure provides an electronic device (such as the base station, full-duplex UE, and half-duplex UE in the above examples). The electronic device includes a processor and a machine-readable storage medium, and the machine-readable storage medium stores machine-executable instructions that can be executed by the processor; the processor is used for executing machine-executable instructions to realize the data transmission method disclosed in the above examples of the present disclosure.

In an example, when the electronic device is a base station, when the machine-readable instruction is executed by the processor, following operations are performed: when a sub-band full-duplex (SBFD) time-frequency resource is configured as uplink transmission or flexible transmission, allocating an available time-frequency resource from the SBFD time-frequency resource; and receiving uplink data corresponding to at least one uplink channel on the available time-frequency resource.

In an example, when the electronic device is a full-duplex UE, when the machine-readable instruction is executed by the processor, following operations are performed: when a sub-band full-duplex (SBFD) time-frequency resource is configured, by a base station, as uplink transmission or flexible transmission, acquiring an available time-frequency resource allocated by the base station for the full-duplex UE from the SBFD time-frequency resource; for each uplink channel, sending uplink data corresponding to the uplink channel on the available time-frequency resource based on a position relation between an uplink resource occupied by the uplink channel and the SBFD time-frequency resource.

Operations of the processor include: when all of uplink resources occupied by the uplink channel are within the SBFD time-frequency resource, sending the uplink data corresponding to the uplink channel on the available time-frequency resource.

In an example, when the machine-readable instruction is executed by the processor, following operations are performed: when none of uplink resources occupied by the uplink channel is within the SBFD time-frequency resource, and the uplink resources are within an uplink symbol or an F symbol, sending the uplink data corresponding to the uplink channel on an uplink resource outside the SBFD time-frequency resource.

In an example, when the machine-readable instruction is executed by the processor, following operations are performed: for each uplink channel, when part of uplink resources occupied by the uplink channel is within the SBFD time-frequency resource, and rest of the uplink resources occupied by the uplink channel is within an F symbol, forbidding sending the uplink data corresponding to the uplink channel on the available time-frequency resource.

In an example, operations of the processor include: when part of uplink resources occupied by the uplink channel is within the SBFD time-frequency resource, and rest of the uplink resources occupied by the uplink channel is within an F symbol, sending the uplink data corresponding to the uplink channel on the available time-frequency resource.

In an example, when the machine-readable instruction is executed by the processor, following operations are performed: when part of uplink resources occupied by the uplink channel is within the SBFD time-frequency resource, and rest of the uplink resources occupied by the uplink channel is within a downlink symbol, forbidding sending the uplink data corresponding to the uplink channel on the available time-frequency resource.

In an example, operations of the processor include: when part of uplink resources occupied by the uplink channel is within the SBFD time-frequency resource, and rest of the uplink resources occupied by the uplink channel is within a downlink symbol, performing rate matching on initial uplink data corresponding to the uplink channel to obtain target uplink data, and sending the target uplink data on the available time-frequency resource.

In an example, operations of the processor include: performing rate matching on initial uplink data corresponding to the uplink channel to obtain target uplink data include: selecting part of the initial uplink data as the target uplink data; or, performing high channel coding rate processing on the initial uplink data to obtain the target uplink data; or, performing high-order modulation on the initial uplink data to obtain the target uplink data.

In an example, when the machine-readable instruction is executed by the processor, following operations are performed: when the uplink resource occupied by the uplink channel and a downlink resource occupied by a downlink channel are both within the SBFD time-frequency resource, sending the uplink data corresponding to the uplink channel on the available time-frequency resource; and forbidding receiving downlink data corresponding to the downlink channel through the SBFD time-frequency resource.

In an example, when the machine-readable instruction is executed by the processor, following operations are performed: when the uplink resource occupied by the uplink channel and a downlink resource occupied by a downlink channel are both within the SBFD time-frequency resource: sending the uplink data corresponding to the uplink channel on the available time-frequency resource; and receiving downlink data corresponding to the downlink channel through the SBFD time-frequency resource.

In an example, when the machine-readable instruction is executed by the processor, following operations are performed: when the uplink resource occupied by the uplink channel is within the SBFD time-frequency resource, a downlink resource occupied by a downlink channel is outside the SBFD time-frequency resource, and the downlink resource occupied by the downlink channel overlaps with the SBFD time-frequency resource, sending the uplink data corresponding to the uplink channel on the available time-frequency resource; and receiving downlink data corresponding to the downlink channel through the downlink resource.

In an example, operations of the processor include: sending the uplink data corresponding to the uplink channel on the available time-frequency resource includes: acquiring configured uplink channels; where the uplink channels include at least one of an uplink channel in the SBFD time-frequency resource or an uplink channel in an uplink time-frequency resource; acquiring a synchronization signal block (SSB) set and SSB ratio configuration from the base station, where the SSB set includes SSBs, and the SSB ratio configuration includes ratio relations between SSBs; for each uplink channel, determining a target SSB corresponding to the uplink channel based on the SSB set and the SSB ratio configuration, and sending the uplink data corresponding to the uplink channel on the available time-frequency resource based on a matched beam corresponding to the target SSB.

In an example, when the electronic device is a half-duplex UE, when the machine-readable instruction is executed by the processor, following operations are performed: when a sub-band full-duplex (SBFD) time-frequency resource is configured, by a base station, as uplink transmission or flexible transmission, acquiring an available time-frequency resource allocated by the base station for the half-duplex UE from the SBFD time-frequency resource; for each uplink channel, sending uplink data corresponding to the uplink channel on the available time-frequency resource based on a position relation between an uplink resource occupied by the uplink channel and the SBFD time-frequency resource. In an example, operations of the processor include: when all of uplink resources occupied by the uplink channel are within the SBFD time-frequency resource, and slots in the SBFD time-frequency resource do not overlap with slots in a downlink time-frequency resource, sending the uplink data corresponding to the uplink channel on the available time-frequency resource.

In an example, when the machine-readable instruction is executed by the processor, following operations are performed: when none of uplink resources occupied by the uplink channel is within the SBFD time-frequency resource, and the uplink resources are within an uplink symbol or an F symbol, sending the uplink data corresponding to the uplink channel on an uplink resource outside the SBFD time-frequency resource.

In an example, when the machine-readable instruction is executed by the processor, following operations are performed: when part of uplink resources occupied by the uplink channel is within the SBFD time-frequency resource, and rest of the uplink resources occupied by the uplink channel is within an F symbol, forbidding sending the uplink data corresponding to the uplink channel on the available time-frequency resource. In an example, operations of the processor include: when part of uplink resources occupied by the uplink channel is within the SBFD time-frequency resource, rest of the uplink resources occupied by the uplink channel is within an F symbol, and slots in the SBFD time-frequency resource do not overlap with slots in a downlink time-frequency resource, sending the uplink data corresponding to the uplink channel on the available time-frequency resource. In an example, when the machine-readable instruction is executed by the processor, following operations are performed: when part of uplink resources occupied by the uplink channel is within the SBFD time-frequency resource, and rest of the uplink resources occupied by the uplink channel is within a downlink symbol, forbidding sending the uplink data corresponding to the uplink channel on the available time-frequency resource.

In an example, operations of the processor include: when part of uplink resources occupied by the uplink channel is within the SBFD time-frequency resource, rest of the uplink resources occupied by the uplink channel is within a downlink symbol, and slots in the SBFD time-frequency resource do not overlap with slots in a downlink time-frequency resource, performing rate matching on initial uplink data corresponding to the uplink channel to obtain target uplink data, and sending the target uplink data on the available time-frequency resource. In an example, operations of the processor include: performing rate matching on initial uplink data corresponding to the uplink channel to obtain target uplink data include: selecting part of the initial uplink data as the target uplink data; or, performing high channel coding rate processing on the initial uplink data to obtain the target uplink data; or, performing high-order modulation on the initial uplink data to obtain the target uplink data.

In an example, when the machine-readable instruction is executed by the processor, following operations are performed: when the uplink resource occupied by the uplink channel and a downlink resource occupied by a downlink channel are both within the SBFD time-frequency resource, sending the uplink data corresponding to the uplink channel on the available time-frequency resource; and forbidding receiving downlink data corresponding to the downlink channel through the SBFD time-frequency resource.

In an example, when the machine-readable instruction is executed by the processor, following operations are performed: when the uplink resource occupied by the uplink channel and a downlink resource occupied by a downlink channel are both within the SBFD time-frequency resource: based on a channel type of the uplink channel and a channel type of the downlink channel, sending the uplink data corresponding to the uplink channel on the available time-frequency resource, and forbidding receiving downlink data corresponding to the downlink channel through the SBFD time-frequency resource; or, forbidding sending the uplink data corresponding to the uplink channel on the available time-frequency resource, and receiving downlink data corresponding to the downlink channel through the SBFD time-frequency resource; or selecting a target uplink resource not occupied by the downlink resource from the uplink resource, and sending the uplink data corresponding to the uplink channel on the target uplink resource; selecting a target downlink resource not occupied by the uplink resource from the downlink resource, and receiving downlink data corresponding to the downlink channel on the target downlink resource.

In an example, operations of the processor include: based on a channel type of the uplink channel and a channel type of the downlink channel, sending the uplink data corresponding to the uplink channel on the available time-frequency resource, and forbidding receiving downlink data corresponding to the downlink channel through the SBFD time-frequency resource; or, forbidding sending the uplink data corresponding to the uplink channel on the available time-frequency resource, and receiving downlink data corresponding to the downlink channel through the SBFD time-frequency resource includes: when the channel processing priority of the uplink channel is greater than the channel processing priority of the downlink channel, the uplink data corresponding to the uplink channel can be sent on the available time-frequency resource, and the downlink data corresponding to the downlink channel can be forbidden to be received through the SBFD time-frequency resource; or, when the channel processing priority of the uplink channel is smaller than the channel processing priority of the downlink channel, the uplink data corresponding to the uplink channel can be forbidden to be sent on the available time-frequency resource, and the downlink data corresponding to the downlink channel can be received through the SBFD time-frequency resource.

In an example, operations of the processor include: when the channel type of the uplink channel is PUSCH type or PUCCH type, and the channel type of the downlink channel is SSB type or PDCCH type, forbidding sending the uplink data corresponding to the uplink channel on the available time-frequency resource, and receiving the downlink data corresponding to the downlink channel through the SBFD time-frequency resource; when the channel type of the uplink channel is PUCCH type, and the channel type of the downlink channel is CSI-RS type or PDSCH type, sending the uplink data corresponding to the uplink channel on the available time-frequency resource, and forbidding receiving the downlink data corresponding to the downlink channel through the SBFD time-frequency resource; when the channel type of the uplink channel is PUSCH type, and the channel type of the downlink channel is CSI-RS type, forbidding sending the uplink data corresponding to the uplink channel on the available time-frequency resource, and receiving the downlink data corresponding to the downlink channel through the SBFD time-frequency resource.

In an example, operations of the processor include: when the channel type of the uplink channel is PUSCH type, and the channel type of the downlink channel is PDSCH type, and when the uplink channel is dynamically configured and the downlink channel is semi-statically configured, sending uplink data corresponding to the uplink channel on the available time-frequency resource, and forbidding receiving downlink data corresponding to the downlink channel through the SBFD time-frequency resource; when the uplink channel is semi-statically configured and the downlink channel is dynamically configured, forbidding sending uplink data corresponding to the uplink channel on the available time-frequency resource, and receiving downlink data corresponding to the downlink channel through the SBFD time-frequency resource; when the uplink channel and the downlink channel are both dynamically scheduled, or the uplink channel and the downlink channel are both semi-statically scheduled, and when a service priority corresponding to the uplink channel is higher than a service priority corresponding to the downlink channel, sending the uplink data corresponding to the uplink channel on the available time-frequency resource, and forbidding receiving downlink data corresponding to the downlink channel through the SBFD time-frequency resource; when the service priority corresponding to the uplink channel is lower than the service priority of the downlink channel, forbidding sending the uplink data corresponding to the uplink channel on the available time-frequency resource, and receiving downlink data corresponding to the downlink channel through the SBFD time-frequency resource.

In an example, operations of the processor include: when a service priority corresponding to the uplink channel is equal to a service priority corresponding to the downlink channel, and when a time sequence corresponding to the uplink channel is earlier than a time sequence corresponding to the downlink channel, sending the uplink data corresponding to the uplink channel on the available time-frequency resource, and forbidding receiving downlink data corresponding to the downlink channel through the SBFD time-frequency resource; when the time sequence corresponding to the uplink channel is later than the time sequence corresponding to the downlink channel, forbidding sending the uplink data corresponding to the uplink channel on the available time-frequency resource, and receiving downlink data corresponding to the downlink channel through the SBFD time-frequency resource; or based on a random order, sending the uplink data corresponding to the uplink channel on the available time-frequency resource, and forbidding receiving downlink data corresponding to the downlink channel through the SBFD time-frequency resource; or based on a random order, forbidding sending the uplink data corresponding to the uplink channel on the available time-frequency resource, and receiving downlink data corresponding to the downlink channel through the SBFD time-frequency resource.

In an example, when the machine-readable instruction is executed by the processor, following operations are performed: when the uplink resource occupied by the uplink channel is within the SBFD time-frequency resource, the downlink resource occupied by the downlink channel is outside the SBFD time-frequency resource, and the downlink resource occupied by the downlink channel overlap with the SBFD time-frequency resource, based on a channel type of the uplink channel and a channel type of the downlink channel, sending the uplink data corresponding to the uplink channel on the available time-frequency resource, and forbidding receiving downlink data corresponding to the downlink channel through the downlink resource; or, forbidding sending the uplink data corresponding to the uplink channel on the available time-frequency resource, and receiving downlink data corresponding to the downlink channel through the downlink resource; or selecting a target uplink resource not occupied by the downlink resource from the uplink resource, and sending the uplink data corresponding to the uplink channel on the target uplink resource; selecting a target downlink resource not occupied by the uplink resource from the downlink resource, and receiving downlink data corresponding to the downlink channel on the target downlink resource. In an example, operations of the processor include: sending the uplink data corresponding to the uplink channel on the target uplink resource includes: performing rate matching on initial uplink data corresponding to the uplink channel to obtain target uplink data, and sending the target uplink data on the target uplink resource.

In an example, operations of the processor include: based on a channel type of the uplink channel and a channel type of the downlink channel, sending the uplink data corresponding to the uplink channel on the available time-frequency resource, and forbidding receiving downlink data corresponding to the downlink channel through the downlink resource; or, forbidding sending the uplink data corresponding to the uplink channel on the available time-frequency resource, and receiving downlink data corresponding to the downlink channel through the downlink resource includes: when the channel processing priority of the uplink channel is greater than the channel processing priority of the downlink channel, the uplink data corresponding to the uplink channel can be sent on the available time-frequency resource, and the downlink data corresponding to the downlink channel can be forbidden to be received through the downlink resource; or, when the channel processing priority of the uplink channel is smaller than the channel processing priority of the downlink channel, the uplink data corresponding to the uplink channel can be forbidden to be sent on the available time-frequency resource, and the downlink data corresponding to the downlink channel can be received through the downlink resource. In an example, operations of the processor include: when the channel type of the uplink channel is PUSCH type or PUCCH type, and the channel type of the downlink channel is SSB type or PDCCH type, forbidding sending the uplink data corresponding to the uplink channel on the available time-frequency resource, and receiving the downlink data corresponding to the downlink channel through the downlink resource; when the channel type of the uplink channel is PUCCH type, and the channel type of the downlink channel is CSI-RS type or PDSCH type, sending the uplink data corresponding to the uplink channel on the available time-frequency resource, and forbidding receiving the downlink data corresponding to the downlink channel through the downlink resource; when the channel type of the uplink channel is PUSCH type, and the channel type of the downlink channel is CSI-RS type, forbidding sending the uplink data corresponding to the uplink channel on the available time-frequency resource, and receiving the downlink data corresponding to the downlink channel through the downlink resource.

In an example, operations of the processor include: when the channel type of the uplink channel is PUSCH type, and the channel type of the downlink channel is PDSCH type, and when the uplink channel is dynamically scheduled and the downlink channel is semi-statically scheduled, sending the uplink data corresponding to the uplink channel on the available time-frequency resource, and forbidding receiving the downlink data corresponding to the downlink channel through the downlink resource; when the uplink channel is semi-statically scheduled and the downlink channel is dynamically scheduled, forbidding sending the uplink data corresponding to the uplink channel on the available time-frequency resource, and receiving downlink data corresponding to the downlink channel through the downlink resource; when the uplink channel and the downlink channel are both dynamically scheduled, or the uplink channel and the downlink channel are both semi-statically scheduled, and when a service priority corresponding to the uplink channel is higher than a service priority corresponding to the downlink channel, sending the uplink data corresponding to the uplink channel on the available time-frequency resource, and forbidding receiving downlink data corresponding to the downlink channel through the downlink resource; when the service priority corresponding to the uplink channel is lower than the service priority of the downlink channel, forbidding sending the uplink data corresponding to the uplink channel on the available time-frequency resource, and receiving downlink data corresponding to the downlink channel through the downlink resource.

In an example, operations of the processor include: when a service priority corresponding to the uplink channel is equal to a service priority corresponding to the downlink channel, and when a time sequence corresponding to the uplink channel is earlier than a time sequence corresponding to the downlink channel, send the uplink data corresponding to the uplink channel on the available time-frequency resource, and forbid receiving downlink data corresponding to the downlink channel through the downlink resource; when the time sequence corresponding to the uplink channel is later than the time sequence corresponding to the downlink channel, forbid sending the uplink data corresponding to the uplink channel on the available time-frequency resource, and receive downlink data corresponding to the downlink channel through the downlink resource; or, based on a random sequence, send the uplink data corresponding to the uplink channel on the available time-frequency resource, and forbid receiving downlink data corresponding to the downlink channel through the downlink resource; or, based on a random sequence, forbid sending the uplink data corresponding to the uplink channel on the available time-frequency resource, and receive downlink data corresponding to the downlink channel through the downlink resource.

In an example, when the machine-readable instruction is executed by the processor, following operations are performed: when the uplink resource occupied by the uplink channel is within the SBFD time-frequency resource, a downlink resource occupied by a SSB is outside the SBFD time-frequency resource, and the downlink resource occupied by the SSB overlaps with the SBFD time-frequency resource, sending the uplink data corresponding to the uplink channel on the available time-frequency resource; and receiving SSB corresponding to the downlink channel through the downlink resource.

In an example, when the machine-readable instruction is executed by the processor, following operations are performed: when the uplink resource occupied by the uplink channel is within the SBFD time-frequency resource, the downlink resource occupied by the SSB is outside the SBFD time-frequency resource, and the downlink resource occupied by the SSB overlaps with the SBFD time-frequency resource, receiving SSB corresponding to the downlink channel through the downlink resource; when the SSB does not need to be received through the downlink resource, sending the uplink data corresponding to the uplink channel on the available time-frequency resource.

In an example, operations of the processor include: sending the uplink data corresponding to the uplink channel on the available time-frequency resource includes: acquiring configured uplink channels; where the uplink channels include at least one of an uplink channel in the SBFD time-frequency resource or an uplink channel in an uplink time-frequency resource; acquiring a synchronization signal block (SSB) set and SSB ratio configuration from the base station, where the SSB set includes SSBs, and the SSB ratio configuration includes ratio relations between SSBs; for each uplink channel, determining a target SSB corresponding to the uplink channel based on the SSB set and the SSB ratio configuration, and sending the uplink data corresponding to the uplink channel on the available time-frequency resource based on a matched beam corresponding to the target SSB.

Based on a same inventive concept as the above method, an example of the present disclosure also provides a machine-readable storage medium, on which a number of computer instructions are stored, which, when executed by a processor, can realize the data transmission method disclosed in the above example of the present disclosure. The machine-readable storage medium can be any electronic, magnetic, optical or other physical storage apparatus, and can contain or store information, such as executable instructions, data, and so on. For example, the machine-readable storage medium may be: RAM (Random Access Memory), volatile memory, non-volatile memory, flash memory, storage drive (such as hard disk drive), solid state disk, any type of storage disk (such as optical disk, dvd, etc.), or similar storage medium, or a combination thereof.

The systems, apparatuses, modules or units set forth in the above embodiments can be realized by computer chips or entities, or by products with certain functions. A typical implementation device is a computer, and the specific form of the computer can be a personal computer, a laptop computer, a cellular phone, a camera phone, a smart phone, a personal digital assistant, a media player, a navigation device, an email transceiver, a game console, a tablet computer, a wearable device or a combination of any of these devices.

For the convenience of description, when describing the above devices, the functions are divided into various units and described separately. Of course, functions of each unit can be realized in one or more pieces of software and/or hardware when the disclosure is implemented.

It should be understood by those skilled in the art that embodiments of the present disclosure can be provided as a method, a system, or a computer program product. Therefore, the present disclosure can take a form of an entirely hardware embodiment, an entirely software embodiment, or an embodiment combining software and hardware aspects. Furthermore, embodiments of the present disclosure may take a form of computer program products implemented on one or more computer-usable storage media (including but not limited to disk storage, CD-ROM, optical storage, etc.) containing computer-usable program codes.

The present disclosure is described with reference to flowcharts and/or block diagrams of methods, devices (systems), and computer program products according to embodiments of the present disclosure. It should be understood that each flow and/or block in the flowchart and/or block diagram, and combinations of the flow and/or block in the flowchart and/or block diagram can be implemented by computer program instructions. These computer program instructions may be provided to a processor of a general-purpose computer, special-purpose computer, embedded processor or other programmable data processing apparatus to produce a machine, such that the instructions which are executed by the processor of the computer or other programmable data processing apparatus produce means for implementing the functions specified in the flowchart flow or flows and/or block or blocks in the block diagram. Moreover, these computer program instructions can also be stored in a computer-readable memory that can direct a computer or other programmable data processing apparatus to work in a specific manner, so that the instructions stored in the computer-readable memory produce an article of manufacture including instruction means that implement the functions specified in one flow or multiple flows of the flowchart and/or one block or multiple blocks of the block diagram. These computer program instructions may also be loaded onto a computer or other programmable data processing apparatus, such that a series of operational steps are performed on the computer or other programmable apparatus to produce a computer-implemented process, such that the instructions executed on the computer or other programmable apparatus provide steps for implementing the functions specified in the flowchart flow or flows and/or block or blocks of the block diagram.

The above are only examples of the present disclosure, and are not used to limit the present disclosure. Various modifications and variations will occur to those skilled in the art. Any modification, equivalent substitution, improvement, etc., made within the spirit and principle of the present disclosure should be included in the scope of the claims of the present disclosure.

## Claims

1. A data transmission method, performed by a base station, comprising:
when a sub-band full-duplex, SBFD, time-frequency resource is configured as uplink transmission or flexible transmission, allocating an available time-frequency resource from the SBFD time-frequency resource;
receiving uplink data corresponding to at least one uplink channel on the available time-frequency resource.

2. The method according to claim 1, wherein
the SBFD time-frequency resource is semi-statically configured; or,
the SBFD time-frequency resource is dynamically configured.

3. The method according to claim 1, wherein
each of the at least one uplink channel is a dynamically scheduled physical uplink shared channel, PUSCH or physical uplink control channel, PUCCH; or,
each of the at least one uplink channel is a semi-statically scheduled PUSCH or PUCCH.

4. The method according to claim 1, wherein
the uplink data corresponding to each of the at least one uplink channel is initially transmitted uplink data; or,
the uplink data corresponding to each of the at least one uplink channel is K-th repeatedly transmitted uplink data, wherein K is a positive integer.

5. The method according to any one of claims 1-4, wherein
the uplink data is in a connected state; or,
the uplink data is in an idle state or an inactive state; or,
the uplink data is in a random access procedure; or,
the uplink data is uplink data completed with a random access procedure but not completed with a reconfiguration process.

6. A data transmission method, performed by a full-duplex user equipment, UE, comprising:
when a sub-band full-duplex, SBFD, time-frequency resource is configured, by a base station, as uplink transmission or flexible transmission, acquiring an available time-frequency resource allocated by the base station for the full-duplex UE from the SBFD time-frequency resource;
for each uplink channel, sending uplink data corresponding to the uplink channel on the available time-frequency resource based on a position relation between an uplink resource occupied by the uplink channel and the SBFD time-frequency resource.

7. The method according to claim 6, wherein
sending uplink data corresponding to the uplink channel on the available time-frequency resource based on a position relation between an uplink resource occupied by the uplink channel and the SBFD time-frequency resource comprises:
when all of uplink resources occupied by the uplink channel are within the SBFD time-frequency resource, sending the uplink data corresponding to the uplink channel on the available time-frequency resource.

8. The method according to claim 6, further comprising:
when none of uplink resources occupied by the uplink channel is within the SBFD time-frequency resource, and the uplink resources are within an uplink symbol or an F symbol, sending the uplink data corresponding to the uplink channel on an uplink resource outside the SBFD time-frequency resource.

9. The method according to claim 6, further comprising:
for each uplink channel, when part of uplink resources occupied by the uplink channel is within the SBFD time-frequency resource, and rest of the uplink resources occupied by the uplink channel is within an F symbol, forbidding sending the uplink data corresponding to the uplink channel on the available time-frequency resource.

10. The method according to claim 6, wherein
sending uplink data corresponding to the uplink channel on the available time-frequency resource based on a position relation between an uplink resource occupied by the uplink channel and the SBFD time-frequency resource comprises:
when part of uplink resources occupied by the uplink channel is within the SBFD time-frequency resource, and rest of the uplink resources occupied by the uplink channel is within an F symbol, sending the uplink data corresponding to the uplink channel on the available time-frequency resource.

11. The method according to claim 6, further comprising:
when part of uplink resources occupied by the uplink channel is within the SBFD time-frequency resource, and rest of the uplink resources occupied by the uplink channel is within a downlink symbol, forbidding sending the uplink data corresponding to the uplink channel on the available time-frequency resource.

12. The method according to claim 6, wherein
sending uplink data corresponding to the uplink channel on the available time-frequency resource based on a position relation between an uplink resource occupied by the uplink channel and the SBFD time-frequency resource comprises:
when part of uplink resources occupied by the uplink channel is within the SBFD time-frequency resource, and rest of the uplink resources occupied by the uplink channel is within a downlink symbol, performing rate matching on initial uplink data corresponding to the uplink channel to obtain target uplink data, and sending the target uplink data on the available time-frequency resource.

13. The method according to claim 12, wherein performing rate matching on initial uplink data corresponding to the uplink channel to obtain target uplink data comprises:
selecting part of the initial uplink data as the target uplink data; or,
acquiring the target uplink data by performing high channel coding rate processing on the initial uplink data; or,
acquiring the target uplink data by performing high-order modulation on the initial uplink data.

14. The method according to claim 6, wherein when the uplink resource occupied by the uplink channel and a downlink resource occupied by a downlink channel are both within the SBFD time-frequency resource, the method further comprises:
sending the uplink data corresponding to the uplink channel on the available time-frequency resource; and
forbidding receiving downlink data corresponding to the downlink channel on the SBFD time-frequency resource.

15. The method according to claim 6, wherein when the uplink resource occupied by the uplink channel and a downlink resource occupied by a downlink channel are both within the SBFD time-frequency resource, the method further comprises:
sending the uplink data corresponding to the uplink channel on the available time-frequency resource; and
receiving downlink data corresponding to the downlink channel on the SBFD time-frequency resource.

16. The method according to claim 6, wherein when the uplink resource occupied by the uplink channel is within the SBFD time-frequency resource, a downlink resource occupied by a downlink channel is outside the SBFD time-frequency resource, and the downlink resource occupied by the downlink channel overlaps with the SBFD time-frequency resource, the method further comprises:
sending the uplink data corresponding to the uplink channel on the available time-frequency resource; and
receiving downlink data corresponding to the downlink channel on the downlink resource.

17. The method according to any one of claims 6-16, wherein
sending the uplink data corresponding to the uplink channel on the available time-frequency resource comprises:
acquiring configured uplink channels; wherein the uplink channels comprise at least one of an uplink channel in the SBFD time-frequency resource or an uplink channel in an uplink time-frequency resource;
acquiring a synchronization signal block, SSB, set and SSB ratio configuration from the base station, wherein the SSB set comprises SSBs, and the SSB ratio configuration comprises ratio relations between SSBs; and
for each uplink channel, determining a target SSB corresponding to the uplink channel based on the SSB set and the SSB ratio configuration, and sending the uplink data corresponding to the uplink channel on the available time-frequency resource based on a matched beam corresponding to the target SSB.

18. The method according to any one of claims 6-16, wherein
the SBFD time-frequency resource is semi-statically configured; or,
the SBFD time-frequency resource is dynamically configured.

19. The method according to any one of claims 6-16, wherein
each uplink channel is a dynamically scheduled physical uplink shared channel, PUSCH, or physical uplink control channel, PUCCH; or,
each uplink channel is a semi-statically scheduled PUSCH or PUCCH.

20. The method according to any one of claims 6-16, wherein
the uplink data corresponding to the each uplink channel is initially transmitted uplink data; or, the uplink data corresponding to the each uplink channel is K-th repeatedly transmitted uplink data, wherein K is a positive integer.

21. The method according to any one of claims 6-16, wherein
the uplink data is in a connected state; or,
the uplink data is in an idle state or an inactive state; or,
the uplink data is in a random access procedure; or,
the uplink data is uplink data completed with a random access procedure but not completed with a reconfiguration process.

22. A data transmission method, performed by a half-duplex user equipment, UE, comprising:
when a sub-band full-duplex, SBFD, time-frequency resource is configured, by a base station, as uplink transmission or flexible transmission, acquiring an available time-frequency resource allocated by the base station for the half-duplex UE from the SBFD time-frequency resource; and
for each uplink channel, sending uplink data corresponding to the uplink channel on the available time-frequency resource based on a position relation between an uplink resource occupied by the uplink channel and the SBFD time-frequency resource.

23. The method according to claim 22, wherein
sending uplink data corresponding to the uplink channel on the available time-frequency resource based on a position relation between an uplink resource occupied by the uplink channel and the SBFD time-frequency resource comprises:
when all of uplink resources occupied by the uplink channel are within the SBFD time-frequency resource, and slots in the SBFD time-frequency resource do not overlap with slots in a downlink time-frequency resource, sending the uplink data corresponding to the uplink channel on the available time-frequency resource.

24. The method according to claim 22, further comprising:
when none of uplink resources occupied by the uplink channel is within the SBFD time-frequency resource, and the uplink resources are within an uplink symbol or an F symbol, sending the uplink data corresponding to the uplink channel on an uplink resource outside the SBFD time-frequency resource.

25. The method according to claim 22, further comprising:
when part of uplink resources occupied by the uplink channel is within the SBFD time-frequency resource, and rest of the uplink resources occupied by the uplink channel is within an F symbol, forbidding sending the uplink data corresponding to the uplink channel on the available time-frequency resource.

26. The method according to claim 22, wherein
sending uplink data corresponding to the uplink channel on the available time-frequency resource based on a position relation between an uplink resource occupied by the uplink channel and the SBFD time-frequency resource comprises:
when part of uplink resources occupied by the uplink channel is within the SBFD time-frequency resource, rest of the uplink resources occupied by the uplink channel is within an F symbol, and slots in the SBFD time-frequency resource do not overlap with slots in a downlink time-frequency resource, sending the uplink data corresponding to the uplink channel on the available time-frequency resource.

27. The method according to claim 22, further comprising:
when part of uplink resources occupied by the uplink channel is within the SBFD time-frequency resource, and rest of the uplink resources occupied by the uplink channel is within a downlink symbol, forbidding sending the uplink data corresponding to the uplink channel on the available time-frequency resource.

28. The method according to claim 22, wherein
sending uplink data corresponding to the uplink channel on the available time-frequency resource based on a position relation between an uplink resource occupied by the uplink channel and the SBFD time-frequency resource comprises:
when part of uplink resources occupied by the uplink channel is within the SBFD time-frequency resource, rest of the uplink resources occupied by the uplink channel is within a downlink symbol, and slots in the SBFD time-frequency resource do not overlap with slots in a downlink time-frequency resource, performing rate matching on initial uplink data corresponding to the uplink channel to obtain target uplink data, and sending the target uplink data on the available time-frequency resource.

29. The method according to claim 28, performing rate matching on initial uplink data corresponding to the uplink channel to obtain target uplink data comprises:
selecting part of the initial uplink data as the target uplink data; or,
performing high channel coding rate processing on the initial uplink data to obtain the target uplink data; or,
performing high-order modulation on the initial uplink data to obtain the target uplink data.

30. The method according to claim 22, wherein when the uplink resource occupied by the uplink channel and a downlink resource occupied by a downlink channel are both within the SBFD time-frequency resource, the method further comprises:
sending the uplink data corresponding to the uplink channel on the available time-frequency resource; and
forbidding receiving downlink data corresponding to the downlink channel on the SBFD time-frequency resource.

31. The method according to claim 22, wherein when the uplink resource occupied by the uplink channel and a downlink resource occupied by a downlink channel are both within the SBFD time-frequency resource, the method further comprises:
based on a channel type of the uplink channel and a channel type of the downlink channel, sending the uplink data corresponding to the uplink channel on the available time-frequency resource, and forbidding receiving downlink data corresponding to the downlink channel through the SBFD time-frequency resource; or, forbidding sending the uplink data corresponding to the uplink channel on the available time-frequency resource, and receiving downlink data corresponding to the downlink channel through the SBFD time-frequency resource; or
selecting a target uplink resource not occupied by the downlink resource from the uplink resource, and sending the uplink data corresponding to the uplink channel on the target uplink resource; selecting a target downlink resource not occupied by the uplink resource from the downlink resource, and sending downlink data corresponding to the downlink channel on the target downlink resource.

32. The method according to claim 31, wherein based on a channel type of the uplink channel and a channel type of the downlink channel, sending the uplink data corresponding to the uplink channel on the available time-frequency resource, and forbidding receiving downlink data corresponding to the downlink channel through the SBFD time-frequency resource; or, forbidding sending the uplink data corresponding to the uplink channel on the available time-frequency resource, and receiving downlink data corresponding to the downlink channel through the SBFD time-frequency resource comprises:
when a channel processing priority corresponding to the channel type of the uplink channel is higher than a channel processing priority corresponding to the channel type of the downlink channel, sending the uplink data corresponding to the uplink channel on the available time-frequency resource, and forbidding receiving the downlink data corresponding to the downlink channel through the SBFD time-frequency resource; and
when a channel processing priority corresponding to the channel type of the uplink channel is lower than a channel processing priority corresponding to the channel type of the downlink channel, forbidding sending the uplink data corresponding to the uplink channel on the available time-frequency resource, and receiving the downlink data corresponding to the downlink channel through the SBFD time-frequency resource.

33. The method according to claim 32, wherein
when the channel type of the uplink channel is a PUSCH type or a PUCCH type, and the channel type of the downlink channel is a SSB type or a PDCCH type, the uplink data corresponding to the uplink channel is forbidden to be sent on the available time-frequency resource, and the downlink data corresponding to the downlink channel is received through the SBFD time-frequency resource;
when the channel type of the uplink channel is the PUCCH type, and the channel type of the downlink channel is a channel state information-reference signal, CSI-RS, type or a physical downlink shared channel, PDSCH, type, the uplink data corresponding to the uplink channel is sent on the available time-frequency resource, and the downlink data corresponding to the downlink channel is forbidden to be received through the SBFD time-frequency resource;
when the channel type of the uplink channel is the PUSCH type, and the channel type of the downlink channel is the CSI-RS type, the uplink data corresponding to the uplink channel is forbidden to be sent on the available time-frequency resource, and the downlink data corresponding to the downlink channel is received through the SBFD time-frequency resource.

34. The method according to claim 33, wherein when the channel type of the uplink channel is the PUSCH type, and the channel type of the downlink channel is the PDSCH type, the method further comprises:
when the uplink channel is dynamically scheduled and the downlink channel is semi-statically scheduled, sending the uplink data corresponding to the uplink channel on the available time-frequency resource, and forbidding receiving downlink data corresponding to the downlink channel through the SBFD time-frequency resource; when the uplink channel is semi-statically scheduled and the downlink channel is dynamically scheduled, forbidding sending the uplink data corresponding to the uplink channel on the available time-frequency resource, and receiving downlink data corresponding to the downlink channel through the SBFD time-frequency resource; and
when the uplink channel and the downlink channel are both dynamically scheduled, or the uplink channel and the downlink channel are both semi-statically scheduled, and when a service priority corresponding to the uplink channel is higher than a service priority corresponding to the downlink channel, sending the uplink data corresponding to the uplink channel on the available time-frequency resource, and forbidding receiving downlink data corresponding to the downlink channel through the SBFD time-frequency resource; when the service priority corresponding to the uplink channel is lower than the service priority of the downlink channel, forbidding sending the uplink data corresponding to the uplink channel on the available time-frequency resource, and receiving downlink data corresponding to the downlink channel through the SBFD time-frequency resource.

35. The method according to claim 34, wherein when the service priority corresponding to the uplink channel is equal to the service priority of the downlink channel, the method further comprises:
when a time sequence corresponding to the uplink channel is earlier than a time sequence corresponding to the downlink channel, sending the uplink data corresponding to the uplink channel on the available time-frequency resource, and forbidding receiving downlink data corresponding to the downlink channel through the SBFD time-frequency resource; when the time sequence corresponding to the uplink channel is later than the time sequence corresponding to the downlink channel, forbidding sending the uplink data corresponding to the uplink channel on the available time-frequency resource, and receiving downlink data corresponding to the downlink channel through the SBFD time-frequency resource; or,
based on a random sequence, sending the uplink data corresponding to the uplink channel on the available time-frequency resource, and forbidding receiving downlink data corresponding to the downlink channel through the SBFD time-frequency resource; or, based on a random sequence, forbidding sending the uplink data corresponding to the uplink channel on the available time-frequency resource, and receiving downlink data corresponding to the downlink channel through the SBFD time-frequency resource.

36. The method according to claim 22, when the uplink resource occupied by the uplink channel is within the SBFD time-frequency resource, a downlink resource occupied by a downlink channel is outside the SBFD time-frequency resource, and the downlink resource occupied by the downlink channel overlaps with the SBFD time-frequency resource, the method further comprises:
based on a channel type of the uplink channel and a channel type of the downlink channel, sending the uplink data corresponding to the uplink channel on the available time-frequency resource, and forbidding receiving downlink data corresponding to the downlink channel through the downlink resource; or, forbidding sending the uplink data corresponding to the uplink channel on the available time-frequency resource, and receiving downlink data corresponding to the downlink channel through the downlink resource; or
selecting a target uplink resource not occupied by the downlink resource from the uplink resource, and sending the uplink data corresponding to the uplink channel on the target uplink resource; selecting a target downlink resource not occupied by the uplink resource from the downlink resource, and sending downlink data corresponding to the downlink channel on the target downlink resource.

37. The method according to claim 31 or 36, wherein
sending the uplink data corresponding to the uplink channel on the target uplink resource comprises:
performing rate matching on initial uplink data corresponding to the uplink channel to obtain target uplink data, and
sending the target uplink data on the target uplink resource.

38. The method according to claim 36, wherein
based on a channel type of the uplink channel and a channel type of the downlink channel, sending the uplink data corresponding to the uplink channel on the available time-frequency resource, and forbidding receiving downlink data corresponding to the downlink channel through the downlink resource; or, forbidding sending the uplink data corresponding to the uplink channel on the available time-frequency resource, and receiving downlink data corresponding to the downlink channel through the downlink resource comprises:
when a channel processing priority corresponding to the channel type of the uplink channel is higher than a channel processing priority corresponding to the channel type of the downlink channel, sending the uplink data corresponding to the uplink channel on the available time-frequency resource, and forbidding receiving the downlink data corresponding to the downlink channel through the downlink resource; and
when a channel processing priority corresponding to the channel type of the uplink channel is lower than a channel processing priority corresponding to the channel type of the downlink channel, forbidding sending the uplink data corresponding to the uplink channel on the available time-frequency resource, and receiving the downlink data corresponding to the downlink channel through the downlink resource.

39. The method according to claim 38, wherein
when the channel type of the uplink channel is a PUSCH type or a PUCCH type, and the channel type of the downlink channel is a SSB type or a PDCCH type, the uplink data corresponding to the uplink channel is forbidden to be sent on the available time-frequency resource, and the downlink data corresponding to the downlink channel is received through the downlink resource;
when the channel type of the uplink channel is the PUCCH type, and the channel type of the downlink channel is a channel state information-reference signal, CSI-RS, type or a physical downlink shared channel, PDSCH, type, the uplink data corresponding to the uplink channel is sent on the available time-frequency resource, and the downlink data corresponding to the downlink channel is forbidden to be received through the downlink resource;
when the channel type of the uplink channel is the PUSCH type, and the channel type of the downlink channel is the CSI-RS type, the uplink data corresponding to the uplink channel is forbidden to be sent on the available time-frequency resource, and the downlink data corresponding to the downlink channel is received through the downlink resource.

40. The method according to claim 39, wherein when the channel type of the uplink channel is the PUSCH type, and the channel type of the downlink channel is the PDSCH type, the method further comprises:
when the uplink channel is dynamically scheduled and the downlink channel is semi-statically scheduled, sending the uplink data corresponding to the uplink channel on the available time-frequency resource, and forbidding receiving downlink data corresponding to the downlink channel through the downlink resource; when the uplink channel is semi-statically scheduled and the downlink channel is dynamically scheduled, forbidding sending the uplink data corresponding to the uplink channel on the available time-frequency resource, and receiving downlink data corresponding to the downlink channel through the downlink resource;
when the uplink channel and the downlink channel are both dynamically scheduled, or the uplink channel and the downlink channel are both semi-statically scheduled, and when a service priority corresponding to the uplink channel is higher than a service priority corresponding to the downlink channel, sending the uplink data corresponding to the uplink channel on the available time-frequency resource, and forbidding receiving downlink data corresponding to the downlink channel through the downlink resource; when the service priority corresponding to the uplink channel is lower than the service priority of the downlink channel, forbidding sending the uplink data corresponding to the uplink channel on the available time-frequency resource, and receiving downlink data corresponding to the downlink channel through the downlink resource.

41. The method according to claim 40, wherein when the service priority corresponding to the uplink channel is equal to the service priority of the downlink channel, the method further comprises:
when a time sequence corresponding to the uplink channel is earlier than a time sequence corresponding to the downlink channel, sending the uplink data corresponding to the uplink channel on the available time-frequency resource, and forbidding receiving downlink data corresponding to the downlink channel through the downlink resource; when the time sequence corresponding to the uplink channel is later than the time sequence corresponding to the downlink channel, forbidding sending the uplink data corresponding to the uplink channel on the available time-frequency resource, and receiving downlink data corresponding to the downlink channel through the downlink resource; or,
based on a random sequence, sending the uplink data corresponding to the uplink channel on the available time-frequency resource, and forbidding receiving downlink data corresponding to the downlink channel through the downlink resource; or, based on a random sequence, forbidding sending the uplink data corresponding to the uplink channel on the available time-frequency resource, and receiving downlink data corresponding to the downlink channel through the downlink resource.

42. The method according to claim 22, when the uplink resource occupied by the uplink channel is within the SBFD time-frequency resource, a downlink resource occupied by a SSB is outside the SBFD time-frequency resource, and the downlink resource occupied by the SSB overlaps with the SBFD time-frequency resource, the method further comprises:
forbidding sending the uplink data corresponding to the uplink channel on the available time-frequency resource; and
receiving the SSB corresponding to the downlink channel through the downlink resource.

43. The method according to claim 22, when the uplink resource occupied by the uplink channel is within the SBFD time-frequency resource, a downlink resource occupied by a SSB is outside the SBFD time-frequency resource, and the downlink resource occupied by the SSB overlaps with the SBFD time-frequency resource, the method further comprises:
receiving the SSB corresponding to the downlink channel on the downlink resource; and
when the SSB does not need to be received through the downlink resource, sending the uplink data corresponding to the uplink channel on the available time-frequency resource.

44. The method according to any one of claims 22-43, wherein
sending the uplink data corresponding to the uplink channel on the available time-frequency resource comprises:
acquiring configured uplink channels; wherein the uplink channels comprise at least one of an uplink channel in the SBFD time-frequency resource or an uplink channel in an uplink time-frequency resource;
acquiring a synchronization signal block, SSB, set and SSB ratio configuration from the base station, wherein the SSB set comprises SSBs, and the SSB ratio configuration comprises ratio relations between SSBs; and
for each uplink channel, determining a target SSB corresponding to the uplink channel based on the SSB set and the SSB ratio configuration, and sending the uplink data corresponding to the uplink channel on the available time-frequency resource based on a matched beam corresponding to the target SSB.

45. The method according to any one of claims 22-43, wherein
the SBFD time-frequency resource is semi-statically configured; or,
the SBFD time-frequency resource is dynamically configured.

46. The method according to any one of claims 22-43, wherein
each uplink channel is a dynamically scheduled physical uplink shared channel, PUSCH, or physical uplink control channel, PUCCH; or,
each uplink channel is a semi-statically scheduled PUSCH or PUCCH.

47. The method according to any one of claims 22-43, wherein
the uplink data corresponding to the each uplink channel is initially transmitted uplink data; or, the uplink data corresponding to the each uplink channel is K-th repeatedly transmitted uplink data, wherein K is a positive integer.

48. The method according to any one of claims 22-43, wherein
the uplink data is in a connected state; or,
the uplink data is in an idle state or an inactive state; or,
the uplink data is in a random access procedure; or,
the uplink data is uplink data completed with a random access procedure but not completed with a reconfiguration process.

49. A data transmission apparatus, applied in a base station, comprising:
an allocating module, configured to, when a sub-band full-duplex, SBFD, time-frequency resource is configured as uplink transmission or flexible transmission, allocate an available time-frequency resource from the SBFD time-frequency resource; and
a transmitting module, configured to receive uplink data corresponding to at least one uplink channel on the available time-frequency resource.

50. The apparatus according to claim 49, wherein
the SBFD time-frequency resource is semi-statically configured; or,
the SBFD time-frequency resource is dynamically configured.

51. The apparatus according to claim 49, wherein
each of the at least one uplink channel is a dynamically scheduled physical uplink shared channel, PUSCH, or physical uplink control channel, PUCCH; or,
each of the at least one uplink channel is a semi-statically scheduled PUSCH or PUCCH.

52. The apparatus according to claim 49, wherein
the uplink data corresponding to each of the at least one uplink channel is initially transmitted uplink data; or, the uplink data corresponding to each of the at least one uplink channel is K-th repeatedly transmitted uplink data, wherein K is a positive integer.

53. The apparatus according to any one of claims 49-52, wherein
the uplink data is in a connected state; or,
the uplink data is in an idle state or an inactive state; or,
the uplink data is in a random access procedure; or,
the uplink data is uplink data completed with a random access procedure but not completed with a reconfiguration process.

54. A data transmission apparatus, applied in a full-duplex user equipment, UE, comprising:
an acquiring module, configured to, when a sub-band full-duplex, SBFD, time-frequency resource is configured, by a base station, as uplink transmission or flexible transmission, acquire an available time-frequency resource allocated by the base station for the full-duplex UE from the SBFD time-frequency resource;
a transmitting module, configured to, for each uplink channel, send uplink data corresponding to the uplink channel on the available time-frequency resource based on a position relation between an uplink resource occupied by the uplink channel and the SBFD time-frequency resource.

55. The apparatus according to claim 54, wherein
when sending uplink data corresponding to the uplink channel on the available time-frequency resource based on a position relation between an uplink resource occupied by the uplink channel and the SBFD time-frequency resource, the transmitting module is specifically configured to: when all of uplink resources occupied by the uplink channel are within the SBFD time-frequency resource, send the uplink data corresponding to the uplink channel on the available time-frequency resource.

56. The apparatus according to claim 54, wherein
the transmitting module is further configured to: when none of uplink resources occupied by the uplink channel is within the SBFD time-frequency resource, and the uplink resources are within an uplink symbol or an F symbol, send the uplink data corresponding to the uplink channel on an uplink resource outside the SBFD time-frequency resource.

57. The apparatus according to claim 54, wherein
the transmitting module is further configured to: for each uplink channel, when part of uplink resources occupied by the uplink channel is within the SBFD time-frequency resource, and rest of the uplink resources occupied by the uplink channel is within an F symbol, forbid sending the uplink data corresponding to the uplink channel on the available time-frequency resource.

58. The apparatus according to claim 54, wherein when sending uplink data corresponding to the uplink channel on the available time-frequency resource based on a position relation between an uplink resource occupied by the uplink channel and the SBFD time-frequency resource, the transmitting module is specifically configured to: when part of uplink resources occupied by the uplink channel is within the SBFD time-frequency resource, and rest of the uplink resources occupied by the uplink channel is within an F symbol, send the uplink data corresponding to the uplink channel on the available time-frequency resource.

59. The apparatus according to claim 54, wherein
the transmitting module is further configured to: when part of uplink resources occupied by the uplink channel is within the SBFD time-frequency resource, and rest of the uplink resources occupied by the uplink channel is within a downlink symbol, forbid sending the uplink data corresponding to the uplink channel on the available time-frequency resource.

60. The apparatus according to claim 54, wherein when sending uplink data corresponding to the uplink channel on the available time-frequency resource based on a position relation between an uplink resource occupied by the uplink channel and the SBFD time-frequency resource, the transmitting module is specifically configured to: when part of uplink resources occupied by the uplink channel is within the SBFD time-frequency resource, and rest of the uplink resources occupied by the uplink channel is within a downlink symbol, perform rate matching on initial uplink data corresponding to the uplink channel to obtain target uplink data, and send the target uplink data on the available time-frequency resource.

61. The apparatus according to claim 60, wherein when performing rate matching on initial uplink data corresponding to the uplink channel to obtain target uplink data, the transmitting module is specifically configured to:
select part of the initial uplink data as the target uplink data; or,
perform high channel coding rate processing on the initial uplink data to obtain the target uplink data; or,
perform high-order modulation on the initial uplink data to obtain the target uplink data.

62. The apparatus according to claim 54, wherein when the uplink resource occupied by the uplink channel and a downlink resource occupied by a downlink channel are both within the SBFD time-frequency resource, the transmitting module is further configured to: send the uplink data corresponding to the uplink channel on the available time-frequency resource; and forbid receiving downlink data corresponding to the downlink channel through the SBFD time-frequency resource.

63. The apparatus according to claim 54, wherein when the uplink resource occupied by the uplink channel and a downlink resource occupied by a downlink channel are both within the SBFD time-frequency resource, the transmitting module is further configured to: send the uplink data corresponding to the uplink channel on the available time-frequency resource; and receive downlink data corresponding to the downlink channel through the SBFD time-frequency resource.

64. The apparatus according to claim 54, wherein when the uplink resource occupied by the uplink channel is within the SBFD time-frequency resource, a downlink resource occupied by a downlink channel is outside the SBFD time-frequency resource, and the downlink resource occupied by the downlink channel overlaps with the SBFD time-frequency resource, the transmitting module is further configured to: send the uplink data corresponding to the uplink channel on the available time-frequency resource; and receive downlink data corresponding to the downlink channel through the downlink resource.

65. The apparatus according to any one of claims 54-64, wherein
when sending the uplink data corresponding to the uplink channel on the available time-frequency resource, the transmitting module is specifically configured to: acquire configured uplink channels; wherein the uplink channels comprise at least one of an uplink channel in the SBFD time-frequency resource or an uplink channel in an uplink time-frequency resource; acquire a synchronization signal block, SSB, set and SSB ratio configuration from the base station, wherein the SSB set comprises SSBs, and the SSB ratio configuration comprises ratio relations between SSBs; for each uplink channel, determine a target SSB corresponding to the uplink channel based on the SSB set and the SSB ratio configuration, and send the uplink data corresponding to the uplink channel on the available time-frequency resource based on a matched beam corresponding to the target SSB.

66. The apparatus according to any one of claims 54-64, wherein
the SBFD time-frequency resource is semi-statically configured; or,
the SBFD time-frequency resource is dynamically configured.

67. The apparatus according to any one of claims 54-64, wherein
each uplink channel is a dynamically scheduled physical uplink shared channel, PUSCH, or physical uplink control channel, PUCCH; or,
each uplink channel is a semi-statically scheduled PUSCH or PUCCH.

68. The apparatus according to any one of claims 54-64, wherein
the uplink data corresponding to each uplink channel is initially transmitted uplink data; or, the uplink data corresponding to each uplink channel is K-th repeatedly transmitted uplink data, wherein K is a positive integer.

69. The apparatus according to any one of claims 54-64, wherein
the uplink data is in a connected state; or,
the uplink data is in an idle state or an inactive state; or,
the uplink data is in a random access procedure; or,
the uplink data is uplink data completed with a random access procedure but not completed with a reconfiguration process.

70. A data transmission apparatus, applied in a half-duplex user equipment, UE, comprising:
an acquiring module, configured to, when a sub-band full-duplex, SBFD, time-frequency resource is configured, by a base station, as uplink transmission or flexible transmission, acquire an available time-frequency resource allocated by the base station for the half-duplex UE from the SBFD time-frequency resource; and
a transmitting module, configured to, for each uplink channel, send uplink data corresponding to the uplink channel on the available time-frequency resource based on a position relation between an uplink resource occupied by the uplink channel and the SBFD time-frequency resource.

71. The apparatus according to claim 70, wherein
when sending uplink data corresponding to the uplink channel on the available time-frequency resource based on a position relation between an uplink resource occupied by the uplink channel and the SBFD time-frequency resource, the transmitting module is specifically configured to: when all of uplink resources occupied by the uplink channel are within the SBFD time-frequency resource, and slots in the SBFD time-frequency resource do not overlap with slots in a downlink time-frequency resource, send the uplink data corresponding to the uplink channel on the available time-frequency resource.

72. The apparatus according to claim 70, wherein
the transmitting module is further configured to: when none of uplink resources occupied by the uplink channel is within the SBFD time-frequency resource, and the uplink resources are within an uplink symbol or an F symbol, send the uplink data corresponding to the uplink channel on an uplink resource outside the SBFD time-frequency resource.

73. The apparatus according to claim 70, wherein
the transmitting module is further configured to: when part of uplink resources occupied by the uplink channel is within the SBFD time-frequency resource, and rest of the uplink resources occupied by the uplink channel is within an F symbol, forbid sending the uplink data corresponding to the uplink channel on the available time-frequency resource.

74. The apparatus according to claim 70, wherein when sending uplink data corresponding to the uplink channel on the available time-frequency resource based on a position relation between an uplink resource occupied by the uplink channel and the SBFD time-frequency resource, the transmitting module is specifically configured to: when part of uplink resources occupied by the uplink channel is within the SBFD time-frequency resource, rest of the uplink resources occupied by the uplink channel is within an F symbol, and slots in the SBFD time-frequency resource do not overlap with slots in a downlink time-frequency resource, send the uplink data corresponding to the uplink channel on the available time-frequency resource.

75. The apparatus according to claim 70, wherein
the transmitting module is further configured to: when part of uplink resources occupied by the uplink channel is within the SBFD time-frequency resource, and rest of the uplink resources occupied by the uplink channel is within a downlink symbol, forbid sending the uplink data corresponding to the uplink channel on the available time-frequency resource.

76. The apparatus according to claim 70, wherein
when sending uplink data corresponding to the uplink channel on the available time-frequency resource based on a position relation between an uplink resource occupied by the uplink channel and the SBFD time-frequency resource, the transmitting module is specifically configured to: when part of uplink resources occupied by the uplink channel is within the SBFD time-frequency resource, rest of the uplink resources occupied by the uplink channel is within a downlink symbol, and slots in the SBFD time-frequency resource do not overlap with slots in a downlink time-frequency resource, perform rate matching on initial uplink data corresponding to the uplink channel to obtain target uplink data, and send the target uplink data on the available time-frequency resource.

77. The apparatus according to claim 76, wherein when performing rate matching on initial uplink data corresponding to the uplink channel to obtain target uplink data, the transmitting module is specifically configured to:
select part of the initial uplink data as the target uplink data; or,
perform high channel coding rate processing on the initial uplink data to obtain the target uplink data; or,
perform high-order modulation on the initial uplink data to obtain the target uplink data.

78. The apparatus according to claim 70, wherein when the uplink resource occupied by the uplink channel and a downlink resource occupied by a downlink channel are both within the SBFD time-frequency resource, the transmitting module is further configured to: send the uplink data corresponding to the uplink channel on the available time-frequency resource; and forbid receiving downlink data corresponding to the downlink channel through the SBFD time-frequency resource.

79. The apparatus according to claim 70, wherein when the uplink resource occupied by the uplink channel and a downlink resource occupied by a downlink channel are both within the SBFD time-frequency resource, the transmitting module is further configured to: based on a channel type of the uplink channel and a channel type of the downlink channel, send the uplink data corresponding to the uplink channel on the available time-frequency resource, and forbid receiving downlink data corresponding to the downlink channel through the SBFD time-frequency resource; or, forbid sending the uplink data corresponding to the uplink channel on the available time-frequency resource, and receive downlink data corresponding to the downlink channel through the SBFD time-frequency resource; or
select a target uplink resource not occupied by the downlink resource from the uplink resource, and send the uplink data corresponding to the uplink channel on the target uplink resource; select a target downlink resource not occupied by the uplink resource from the downlink resource, and receive downlink data corresponding to the downlink channel on the target downlink resource.

80. The apparatus according to claim 79, wherein when based on a channel type of the uplink channel and a channel type of the downlink channel, sending the uplink data corresponding to the uplink channel on the available time-frequency resource, and forbidding receiving downlink data corresponding to the downlink channel through the SBFD time-frequency resource; or, forbidding sending the uplink data corresponding to the uplink channel on the available time-frequency resource, and receiving downlink data corresponding to the downlink channel through the SBFD time-frequency resource, the transmitting module is specifically configured to:
when a channel processing priority corresponding to the channel type of the uplink channel is higher than a channel processing priority corresponding to the channel type of the downlink channel, send the uplink data corresponding to the uplink channel on the available time-frequency resource, and forbid receiving the downlink data corresponding to the downlink channel through the SBFD time-frequency resource;
when a channel processing priority corresponding to the channel type of the uplink channel is lower than a channel processing priority corresponding to the channel type of the downlink channel, forbid sending the uplink data corresponding to the uplink channel on the available time-frequency resource, and receive the downlink data corresponding to the downlink channel through the SBFD time-frequency resource.

81. The apparatus according to claim 80, wherein the transmitting module is further configured to:
when the channel type of the uplink channel is a PUSCH type or a PUCCH type, and the channel type of the downlink channel is a SSB type or a PDCCH type, forbid sending the uplink data corresponding to the uplink channel on the available time-frequency resource, and receive the downlink data corresponding to the downlink channel through the SBFD time-frequency resource;
when the channel type of the uplink channel is the PUCCH type, and the channel type of the downlink channel is a channel state information-reference signal, CSI-RS, type or a physical downlink shared channel, PDSCH, type, send the uplink data corresponding to the uplink channel on the available time-frequency resource, and forbid receiving the downlink data corresponding to the downlink channel through the SBFD time-frequency resource;
when the channel type of the uplink channel is the PUSCH type, and the channel type of the downlink channel is the CSI-RS type, forbid sending the uplink data corresponding to the uplink channel on the available time-frequency resource, and receive the downlink data corresponding to the downlink channel through the SBFD time-frequency resource.

82. The apparatus according to claim 81, wherein when the channel type of the uplink channel is the PUSCH type, and the channel type of the downlink channel is the PDSCH type, the transmitting module is further configured to:
when the uplink channel is dynamically scheduled and the downlink channel is semi-statically scheduled, send the uplink data corresponding to the uplink channel on the available time-frequency resource, and forbid receiving downlink data corresponding to the downlink channel through the SBFD time-frequency resource; when the uplink channel is semi-statically scheduled and the downlink channel is dynamically scheduled, forbid sending the uplink data corresponding to the uplink channel on the available time-frequency resource, and receive downlink data corresponding to the downlink channel through the SBFD time-frequency resource;
when the uplink channel and the downlink channel are both dynamically scheduled, or the uplink channel and the downlink channel are both semi-statically scheduled, and when a service priority corresponding to the uplink channel is higher than a service priority corresponding to the downlink channel, send the uplink data corresponding to the uplink channel on the available time-frequency resource, and forbid receiving downlink data corresponding to the downlink channel through the SBFD time-frequency resource; when the service priority corresponding to the uplink channel is lower than the service priority of the downlink channel, forbid sending the uplink data corresponding to the uplink channel on the available time-frequency resource, and receive downlink data corresponding to the downlink channel through the SBFD time-frequency resource.

83. The apparatus according to claim 82, wherein when the service priority corresponding to the uplink channel is equal to the service priority of the downlink channel, the transmitting module is further configured to:
when a time sequence corresponding to the uplink channel is earlier than a time sequence corresponding to the downlink channel, send the uplink data corresponding to the uplink channel on the available time-frequency resource, and forbid receiving downlink data corresponding to the downlink channel through the SBFD time-frequency resource; when the time sequence corresponding to the uplink channel is later than the time sequence corresponding to the downlink channel, forbid sending the uplink data corresponding to the uplink channel on the available time-frequency resource, and receive downlink data corresponding to the downlink channel through the SBFD time-frequency resource; or,
based on a random sequence, send the uplink data corresponding to the uplink channel on the available time-frequency resource, and forbid receiving downlink data corresponding to the downlink channel through the SBFD time-frequency resource; or, based on a random sequence, forbid sending the uplink data corresponding to the uplink channel on the available time-frequency resource, and receive downlink data corresponding to the downlink channel through the SBFD time-frequency resource.

84. The apparatus according to claim 70, wherein when the uplink resource occupied by the uplink channel is within the SBFD time-frequency resource, a downlink resource occupied by a downlink channel is outside the SBFD time-frequency resource, and the downlink resource occupied by the downlink channel overlaps with the SBFD time-frequency resource, the transmitting module is further configured to: based on a channel type of the uplink channel and a channel type of the downlink channel, send the uplink data corresponding to the uplink channel on the available time-frequency resource, and forbid receiving downlink data corresponding to the downlink channel through the downlink resource; or, forbid sending the uplink data corresponding to the uplink channel on the available time-frequency resource, and receive downlink data corresponding to the downlink channel through the downlink resource; or
select a target uplink resource not occupied by the downlink resource from the uplink resource, and send the uplink data corresponding to the uplink channel on the target uplink resource; select a target downlink resource not occupied by the uplink resource from the downlink resource, and receive downlink data corresponding to the downlink channel on the target downlink resource.

85. The apparatus according to claim 79 or 84, wherein
when sending the uplink data corresponding to the uplink channel on the target uplink resource, the transmitting module is specifically configured to:
perform rate matching on initial uplink data corresponding to the uplink channel to obtain target uplink data, and send the target uplink data on the target uplink resource.

86. The apparatus according to claim 84, wherein when based on a channel type of the uplink channel and a channel type of the downlink channel, sending the uplink data corresponding to the uplink channel on the available time-frequency resource, and forbidding receiving downlink data corresponding to the downlink channel through the downlink resource; or, forbidding sending the uplink data corresponding to the uplink channel on the available time-frequency resource, and receiving downlink data corresponding to the downlink channel through the downlink resource, the transmitting module is specifically configured to:
when a channel processing priority corresponding to the channel type of the uplink channel is higher than a channel processing priority corresponding to the channel type of the downlink channel, send the uplink data corresponding to the uplink channel on the available time-frequency resource, and forbid receiving the downlink data corresponding to the downlink channel through the downlink resource; and
when a channel processing priority corresponding to the channel type of the uplink channel is lower than a channel processing priority corresponding to the channel type of the downlink channel, forbid sending the uplink data corresponding to the uplink channel on the available time-frequency resource, and receive the downlink data corresponding to the downlink channel through the downlink resource.

87. The apparatus according to claim 86, wherein the transmitting module is further configured to:
when the channel type of the uplink channel is a PUSCH type or a PUCCH type, and the channel type of the downlink channel is a SSB type or a PDCCH type, forbid sending the uplink data corresponding to the uplink channel on the available time-frequency resource, and receive the downlink data corresponding to the downlink channel through the downlink resource;
when the channel type of the uplink channel is the PUCCH type, and the channel type of the downlink channel is a channel state information-reference signal, CSI-RS, type or a physical downlink shared channel, PDSCH, type, send the uplink data corresponding to the uplink channel on the available time-frequency resource, and forbid receiving the downlink data corresponding to the downlink channel through the downlink resource;
when the channel type of the uplink channel is the PUSCH type, and the channel type of the downlink channel is the CSI-RS type, forbid sending the uplink data corresponding to the uplink channel on the available time-frequency resource, and receive the downlink data corresponding to the downlink channel through the downlink resource.

88. The apparatus according to claim 87, wherein when the channel type of the uplink channel is the PUSCH type, and the channel type of the downlink channel is the PDSCH type, the transmitting module is further configured to:
when the uplink channel is dynamically scheduled and the downlink channel is semi-statically scheduled, send the uplink data corresponding to the uplink channel on the available time-frequency resource, and forbid receiving downlink data corresponding to the downlink channel through the downlink resource; when the uplink channel is semi-statically scheduled and the downlink channel is dynamically scheduled, forbid sending the uplink data corresponding to the uplink channel on the available time-frequency resource, and receive downlink data corresponding to the downlink channel through the downlink resource;
when the uplink channel and the downlink channel are both dynamically scheduled, or the uplink channel and the downlink channel are both semi-statically scheduled, and when a service priority corresponding to the uplink channel is higher than a service priority corresponding to the downlink channel, send the uplink data corresponding to the uplink channel on the available time-frequency resource, and forbid receiving downlink data corresponding to the downlink channel through the downlink resource; when the service priority corresponding to the uplink channel is lower than the service priority of the downlink channel, forbid sending the uplink data corresponding to the uplink channel on the available time-frequency resource, and receive downlink data corresponding to the downlink channel through the downlink resource.

89. The apparatus according to claim 88, wherein when the service priority corresponding to the uplink channel is equal to the service priority of the downlink channel, the transmitting module is further configured to:
when a time sequence corresponding to the uplink channel is earlier than a time sequence corresponding to the downlink channel, send the uplink data corresponding to the uplink channel on the available time-frequency resource, and forbid receiving downlink data corresponding to the downlink channel through the downlink resource; when the time sequence corresponding to the uplink channel is later than the time sequence corresponding to the downlink channel, forbid sending the uplink data corresponding to the uplink channel on the available time-frequency resource, and receive downlink data corresponding to the downlink channel through the downlink resource; or,
based on a random sequence, send the uplink data corresponding to the uplink channel on the available time-frequency resource, and forbid receiving downlink data corresponding to the downlink channel through the downlink resource; or, based on a random sequence, forbid sending the uplink data corresponding to the uplink channel on the available time-frequency resource, and receive downlink data corresponding to the downlink channel through the downlink resource.

90. The apparatus according to claim 70, wherein when the uplink resource occupied by the uplink channel is within the SBFD time-frequency resource, a downlink resource occupied by a SSB is outside the SBFD time-frequency resource, and the downlink resource occupied by the SSB overlaps with the SBFD time-frequency resource, the transmitting module is further configured to:
forbid sending the uplink data corresponding to the uplink channel on the available time-frequency resource; and
receive the SSB corresponding to the downlink channel through the downlink resource.

91. The apparatus according to claim 70, wherein when the uplink resource occupied by the uplink channel is within the SBFD time-frequency resource, a downlink resource occupied by a SSB is outside the SBFD time-frequency resource, and the downlink resource occupied by the SSB overlaps with the SBFD time-frequency resource, the transmitting module is further configured to:
receive the SSB corresponding to the downlink channel on the downlink resource; and
when the SSB does not need to be received through the downlink resource, send the uplink data corresponding to the uplink channel on the available time-frequency resource.

92. The apparatus according to any one of claims 70-91, wherein when sending the uplink data corresponding to the uplink channel on the available time-frequency resource, the transmitting module is specifically configured to:
acquire configured uplink channels; wherein the uplink channels comprise at least one of an uplink channel in the SBFD time-frequency resource or an uplink channel in an uplink time-frequency resource;
acquire a synchronization signal block, SSB, set and SSB ratio configuration from the base station, wherein the SSB set comprises SSBs, and the SSB ratio configuration comprises ratio relations between SSBs;
for each uplink channel, determine a target SSB corresponding to the uplink channel based on the SSB set and the SSB ratio configuration, and send the uplink data corresponding to the uplink channel on the available time-frequency resource based on a matched beam corresponding to the target SSB.

93. The apparatus according to any one of claims 70-91, wherein
the SBFD time-frequency resource is semi-statically configured; or,
the SBFD time-frequency resource is dynamically configured.

94. The apparatus according to any one of claims 70-91, wherein
each uplink channel is a dynamically scheduled physical uplink shared channel, PUSCH, or physical uplink control channel, PUCCH; or,
each uplink channel is a semi-statically scheduled PUSCH or PUCCH.

95. The apparatus according to any one of claims 70-91, wherein
the uplink data corresponding to each uplink channel is initially transmitted uplink data; or, the uplink data corresponding to each uplink channel is K-th repeatedly transmitted uplink data, wherein K is a positive integer.

96. The apparatus according to any one of claims 70-91, wherein
the uplink data is in a connected state; or,
the uplink data is in an idle state or an inactive state; or,
the uplink data is in a random access procedure; or,
the uplink data is uplink data completed with a random access procedure but not completed with a reconfiguration process.

97. An electronic device, comprising a processor and a machine-readable storage medium, wherein the machine-readable storage medium stores a machine-executable instruction executable by the processor; the processor is configured to execute the machine-executable instruction to implement the method according to any one of claims 1-5, or, to implement the method according to any one of claims 6-21, or, to implement the method according to any one of claims 22-48.
